(19) Europäisches Patentamt
European Patent Office
Office européen des brevets

(11) **EP 4 203 370 A1**

(12) **EUROPEAN PATENT APPLICATION**
published in accordance with Art. 153(4) EPC

(43) Date of publication:
**28.06.2023 Bulletin 2023/26**

(21) Application number: **21873004.2**

(22) Date of filing: **28.09.2021**

(51) International Patent Classification (IPC):
**H04L 5/00** (2006.01)       **H04W 72/04** (2023.01)
**H04B 7/06** (2006.01)

(52) Cooperative Patent Classification (CPC):
**H04B 7/06; H04L 5/00; H04W 72/04**

(86) International application number:
**PCT/KR2021/013217**

(87) International publication number:
**WO 2022/065976 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2020 KR 20200126118**

(71) Applicant: **LG ELECTRONICS, INC.**
**Seoul 07336 (KR)**

(72) Inventors:
• **KIM, Kyuseok**
  **Seoul 06772 (KR)**
• **KANG, Jiwon**
  **Seoul 06772 (KR)**
• **KIM, Hyungtae**
  **Seoul 06772 (KR)**

(74) Representative: **Plasseraud IP**
  **66, rue de la Chaussée d'Antin**
  **75440 Paris Cedex 09 (FR)**

(54) **METHOD FOR TRANSMITTING AND RECEIVING SOUNDING REFERENCE SIGNAL IN WIRELESS COMMUNICATION SYSTEM, AND APPARATUS THEREFOR**

(57)    Proposed are a method for transmitting and receiving a sounding reference signal in a wireless communication system, and an apparatus therefor.

The method performed by a terminal may comprise the steps of: receiving, from a base station, sounding reference signal (SRS)-related configuration information, wherein the SRS-related configuration information includes at least one of information about an SRS resource set, information about a use for the SRS resource set, and/or information about a downlink signal for the use, and the information about the use for the SRS resource set indicates a use for frequency tracking; receiving, from the base station, the downlink signal on the basis of the SRS-related configuration information; performing the frequency tracking on the basis of the downlink signal; and transmitting, to the base station, an SRS corresponding to at least one SRS resource included in the SRS resource set, on the basis of the frequency tracking.

[FIG. 19]

**Description**

[TECHNICAL FIELD]

The present disclosure relates to a wireless communication system, and more particularly to a method for transmitting and receiving sounding reference signal in wireless communication system, and apparatus therefor

[Background Art]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

[Disclosure]

[Technical Problem]

The present disclosure proposes a method for configuring a downlink signal that is a reference for frequency tracking (FT) when transmitting an uplink signal, and an apparatus therefor.

In addition, the present disclosure proposes a method for configuring an SRS resource set/SRS resource for the FT, and an apparatus therefor.

In addition, the present specification proposes a method for preventing a situation in which the SRS resource set / SRS resource for FT cannot be transmitted due to a collision, and an apparatus therefor.

Technical objects to be achieved by the present disclosure are not limited to the aforementioned technical objects, and other technical objects not described above may be evidently understood by a person having ordinary skill in the art to which the present disclosure pertains from the following description.

[Technical Solution]

The present disclosure proposes a method for transmitting a sounding reference signal (SRS) in a wireless communication system, and an apparatus therefor.

The method performed by a terminal may include: receiving, from a base station, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking; receiving, from the base station, the downlink signal based on the SRS-related configuration information; performing the frequency tracking based on the downlink signal; and transmitting, to the base station, an SRS corresponding to at least one SRS resource included in the SRS resource set, based on the frequency tracking.

In addition, in the method of the present disclosure, based on the SRS-related configuration information not including the information related to the downlink signal for the use, the frequency tracking may be performed based on path loss reference reference signal (RS).

In addition, in the method of the present disclosure, the SRS resource set may include one SRS resource.

In addition, in the method of the present disclosure, the one SRS resource may include multiple orthogonal frequency-division multiplexing (OFDM) symbols in one slot, and the multiple OFDM symbols include at least two non-contiguous OFDM symbols.

In addition, in the method of the present disclosure, the one SRS resource may be configured in multiple slots, and the one SRS resource may be configured based on a slot-wise reference signal pattern.

In addition, in the method of the present disclosure, the SRS resource set may include multiple SRS resources.

In addition, in the method of the present disclosure, the multiple SRS resources may be configured to the same antenna port.

In addition, in the method of the present disclosure, the multiple SRS resources may be configured in the same orthogonal frequency-division multiplexing (OFDM) symbol pattern.

In addition, in the method of the present disclosure, the multiple SRS resources may be configured to the same transmissionComb value and the multiple SRS resources may be configured to different combOffset values.

In addition, in the method of the present disclosure, the multiple SRS resources may be configured to the same spatial Relation Info value, and the frequency tracking may be performed based on the spatial Relation Info value.

In addition, in the method of the present disclosure, the downlink signal may be used as a quasi-co-location (QCL) reference reference signal (RS) for at least one SRS resource included in the SRS resource set.

In addition, in the method of the present disclosure, based on the at least one SRS resource included in the SRS resource set being overlapped with transmission of an SRS resource for another use and/or a physical uplink control channel (PUCCH), the at least one SRS resource or an overlapping interval of the at least one SRS resource may be shifted in a time region.

In addition, the present disclosure proposes a terminal configured to transmit a sounding reference signal (SRS) in a wireless communication system, which may include: at least one transceiver; at least one processor; and at least one memory operatively connected to the at least one processor and storing instructions for performing operations based on being executed by the at least one processor, in which the operations may include receiving, from a base station, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking; receiving, from the base station, the downlink signal based on the SRS-related configuration information; performing the frequency tracking based on the downlink signal; and transmitting, to the base station, an SRS corresponding to at least one SRS resource included in the SRS resource set, based on the frequency tracking.

In addition, in the terminal of the present disclosure, based on the SRS-related configuration information not including the information related to the downlink signal for the use, the frequency tracking may be performed based on pathloss reference reference signal (RS).

In addition, in the terminal of the present disclosure, the downlink signal may be used as a quasi-co-location (QCL) reference reference signal (RS) for at least one SRS resource included in the SRS resource set.

In addition, in the terminal of the present disclosure, based on the at least one SRS resource included in the SRS resource set being overlapped with transmission of an SRS resource for another use and/or a physical uplink control channel (PUCCH), the at least one SRS resource or an overlapping interval of the at least one SRS resource may be shifted in a time region.

In addition, the present disclosure proposes a method for receiving a sounding reference signal (SRS) in a wireless communication system, and an apparatus therefor.

The performed by a base station may include: transmitting, to a terminal, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking; transmitting, to the terminal, the downlink signal based on the SRS-related configuration information, wherein the frequency tracking is performed based on the downlink signal; and receiving, from the terminal, an SRS corresponding to at least one SRS resource included in the SRS resource set, based on the frequency tracking.

In addition, a base station configured to receive a sounding reference signal (SRS) in a wireless communication system may include: at least one transceiver; at least one processor; and at least one memory operatively connected to the at least one processor and storing instructions for performing operations based on being executed by the at least one processor, and the operations may include transmitting, to a terminal, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking; transmitting, to the terminal, the downlink signal based on the SRS-related configuration information, wherein the frequency tracking is performed based on the downlink signal; and receiving, from the terminal, an SRS corresponding to at least one SRS resource included in the SRS resource set, based on the frequency tracking.

In addition, a processing apparatus configured to control a terminal to transmit a sounding reference signal (SRS) in a wireless communication system may include: at least one processor; and at least one memory operatively connected to the at least one processor and storing instructions for performing operations based on being executed by the at least one processor, and the operations may include receiving, from a base station, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking; receiving, from the base station, the downlink signal based on the SRS-related configuration information; performing the frequency tracking based on the downlink signal; and transmitting, to the base station, an SRS corresponding to at least one SRS resource included in the SRS resource set, based on the frequency tracking.

In addition, in a computer-readable storage medium storing at least one instruction which, when executed by at least one processor, causes the at least one processor to control operations, the operations may include: receiving, from a base station, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking; receiving, from the base station, the downlink signal based on the SRS-related configuration information; performing the frequency tracking based on the downlink signal; and transmitting, to the base station, an SRS corresponding to at least one SRS resource included in the SRS resource set, based on the frequency tracking.

[Advantageous Effects]

According to the present disclosure, there is an effect that downlink performance can be enhanced by pre-compensating a Doppler shift for downlink in a plurality of transmission and reception point (TRP) environments.

In addition, according to the present disclosure, there is an effect that the Doppler shift for the downlink can be implicitly indicated.

In addition, according to the present disclosure, there is an effect that a terminal can be configured/indicated with a downlink signal for FT.

In addition, according to the present disclosure, there is an effect that measurement accuracy for the Doppler shift of a base station can be enhanced.

Effects which may be obtained by the present disclosure are not limited to the aforementioned effects, and other technical effects not described above may be evidently understood by a person having ordinary skill in the art to which the present disclosure pertains from the following description.

[Description of Drawings]

The accompany drawings, which are included to provide a further understanding of the present disclosure and are incorporated on and constitute a part of the present disclosure illustrate embodiments of the present disclosure and together with the description serve to explain the principles of the present disclosure.

FIG. 1 is a diagram illustrating an example of an overall system structure of NR to which a method proposed in the present disclosure may be applied.

FIG. 2 illustrates a relationship between an uplink frame and a downlink frame in a wireless communication system to which a method proposed in the present disclosure may be applied.

FIG. 3 illustrates an example of a frame structure in an NR system.

FIG. 4 illustrates an example of a resource grid supported by a wireless communication system to which a method proposed in the present disclosure may be applied.

FIG. 5 illustrates a slot structure of an NR frame to which the method proposed in the present disclosure may be applied.

FIG. 6 illustrates examples of a resource grid for each antenna port and numerology to which a method proposed in the disclosure may be applied.

FIG. 7 illustrates physical channels and general signal transmission.

FIG. 8 shows an example of a UL BM procedure using SRS.

FIG. 9 is a flowchart illustrating an example of a UL BM procedure using SRS.

FIG. 10 illustrates examples of a multiple transmission and reception point (TRP)-based transmission/reception method.

FIG. 11 illustrates a simplified schematic diagram of the channel model.

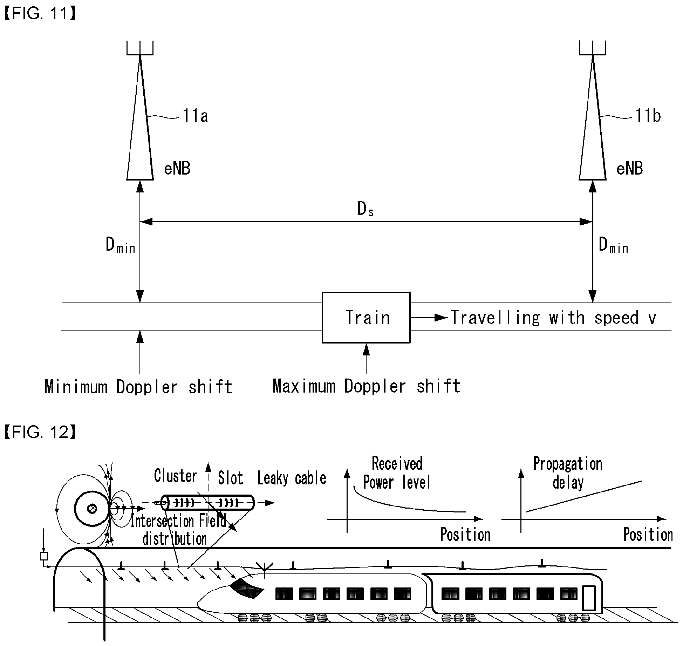

FIG. 11 illustrates a schematic diagram of the channel model.

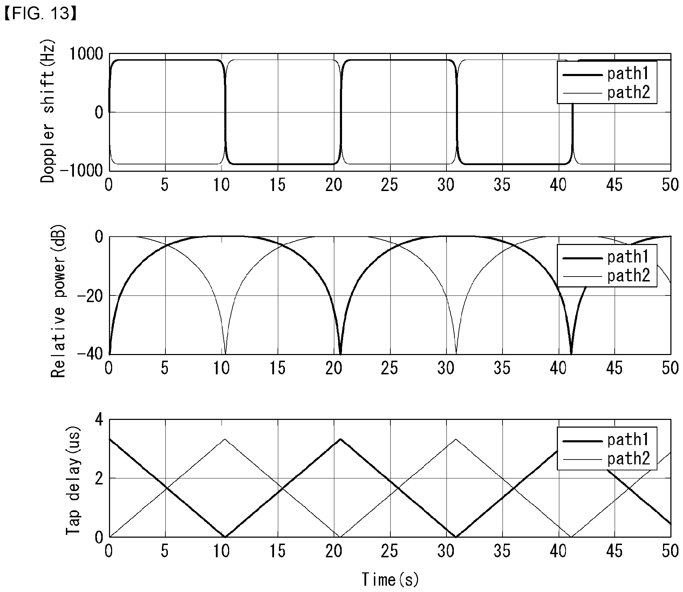

FIG. 13 illustrates examples of parameters and channel characteristics of the SFN channel model.

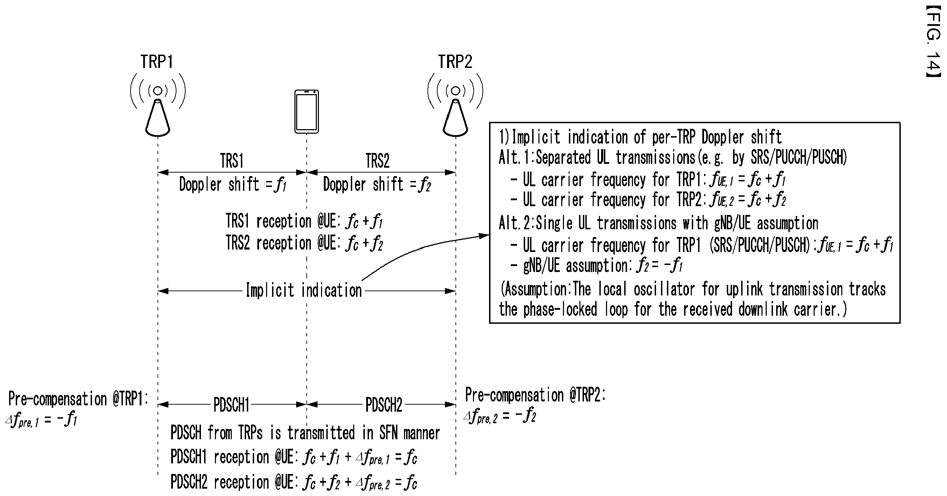

FIG. 14 illustrates an example of Doppler shift pre-compensation.

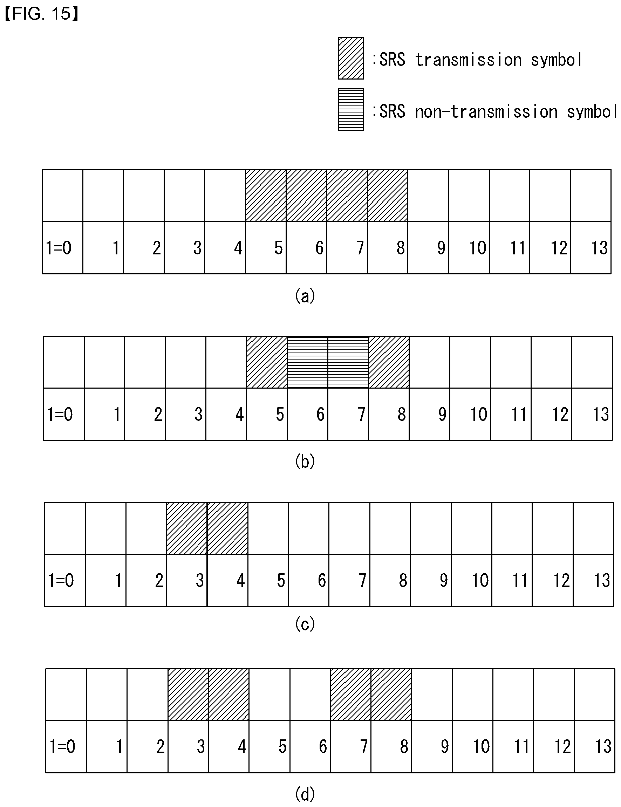

FIG. 15 illustrates an example of Method 2-1-1 proposed in the present disclosure.

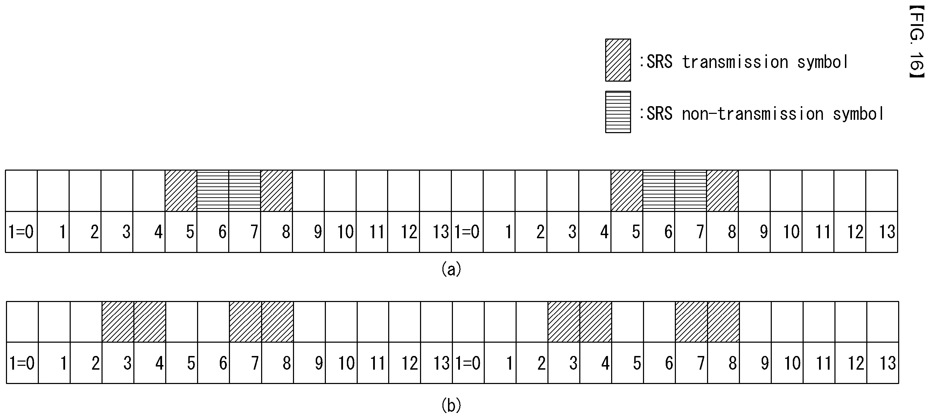

FIG. 16 illustrates an example of Method 2-1-2 proposed in the present disclosure.

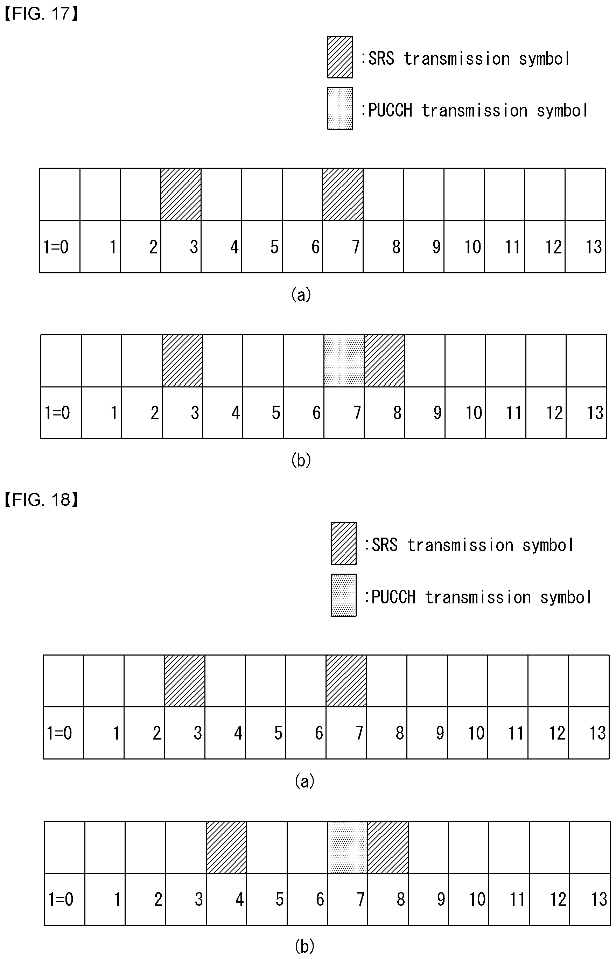

FIG. 17 illustrates an example of Method 3-4 proposed in the present disclosure.

FIG. 18 is a diagram for describing a method for applying the same shift/delay to transmission symbols of all resources in a resource set upon overlapping.

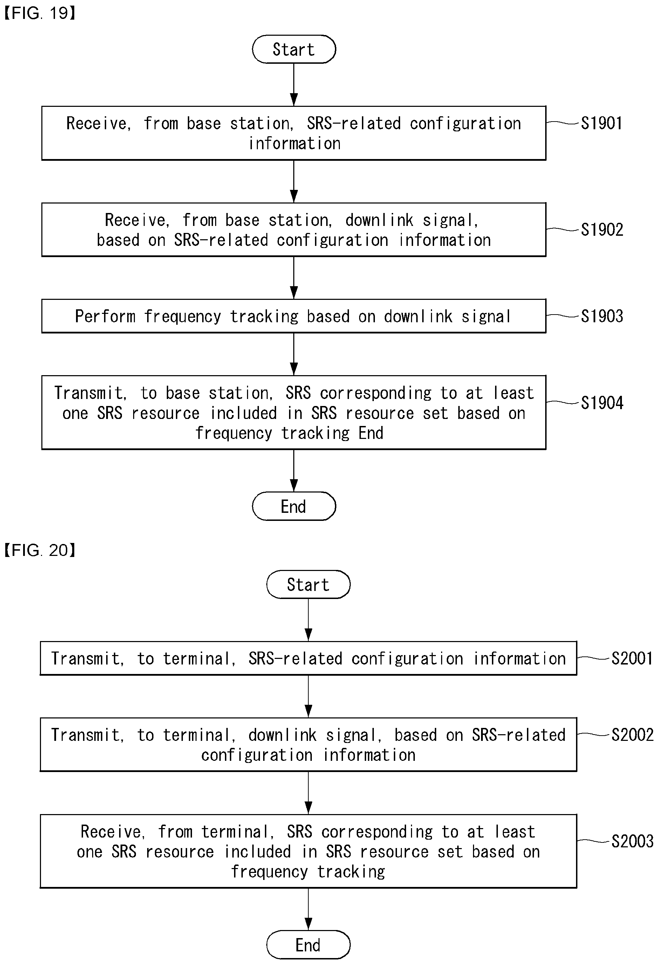

FIG. 19 is a flowchart for describing an operation method of a terminal proposed in the present disclosure.

FIG. 20 is a flowchart for describing an operation method of a base station proposed in the present disclosure.

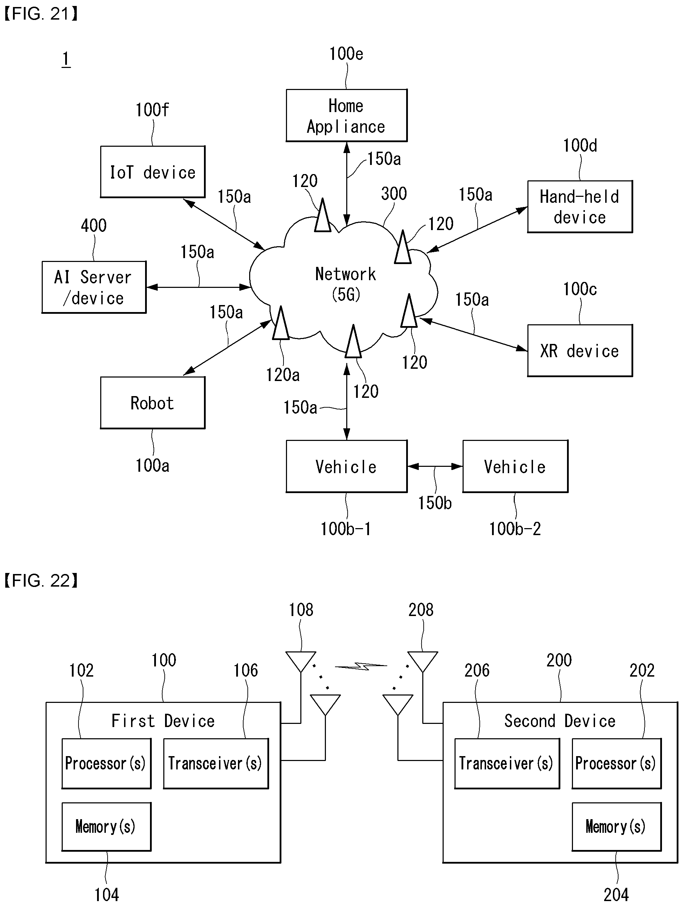

FIG. 21 illustrates a communication system applied to the present disclosure.

FIG. 22 illustrates a wireless device which may be applied to the present disclosure.

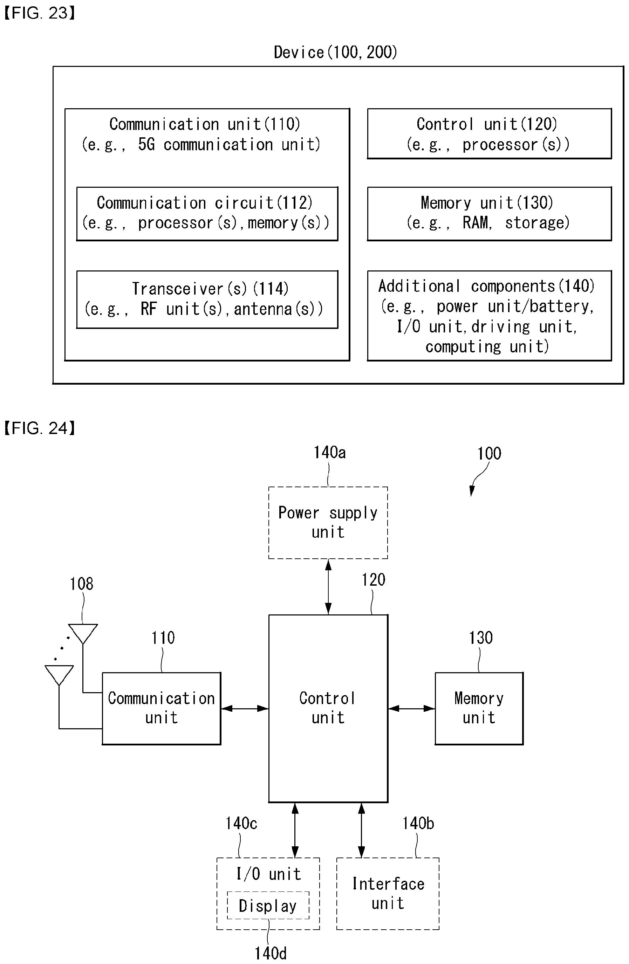

FIG. 23 illustrates another example of a wireless device applied to the present disclosure.

FIG. 24 illustrates a portable device applied to the present disclosure.

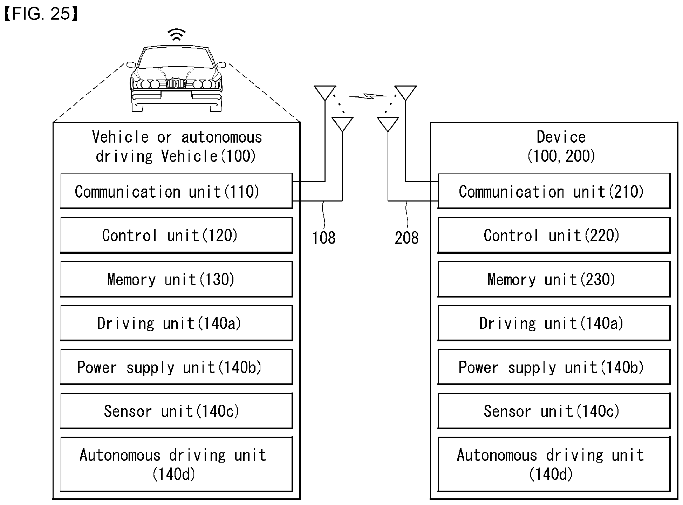

FIG. 25 exemplifies a vehicle or an autonomous driving vehicle to which the present disclosure is applied.

[Mode for Disclosure]

Reference will now be made in detail to embodiments of the present disclosure, examples of which are illustrated in the accompanying drawings. A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE-A or NR), but the technical spirit of the present disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a detailed standard document number. The LTE/NR may be collectively referred to as the 3GPP system. Matters disclosed in a standard document opened before the present disclosure may be referred to for a background art, terms, omissions, etc., used for describing the present disclosure. For example, the following documents may be referred to.

3GPP LTE

- 36.211: Physical channels and modulation
- 36.212: Multiplexing and channel coding
- 36.213: Physical layer procedures
- 36.300: Overall description
- 36.331: Radio Resource Control (RRC)

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 36.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the present disclosure, the technology is called new RAT for convenience. The NR is an expression representing an example of 5G radio access technology (RAT).

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billion. The industry IoT is one of areas in which 5G performs major roles enabling smart city, asset tracking, smart utility, agriculture and security infra.

URLLC includes a new service which will change the industry through remote control of major infra and a link having ultra-reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of mega bits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window. In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver may drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system may support remote treatment providing clinical treatment at a distant place. This helps to reduce a barrier for the distance and may improve access to medical services which are not continuously used at remote farming areas. Furthermore, this is used to save life in important treatment and an emergency condition. A radio sensor network based on mobile communication may provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network created by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used on NG2 reference points between new RAN and NGC.

NG-U: A user plane interface used on NG3 references points between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: A termination point of NG-U interface.

Overview of system

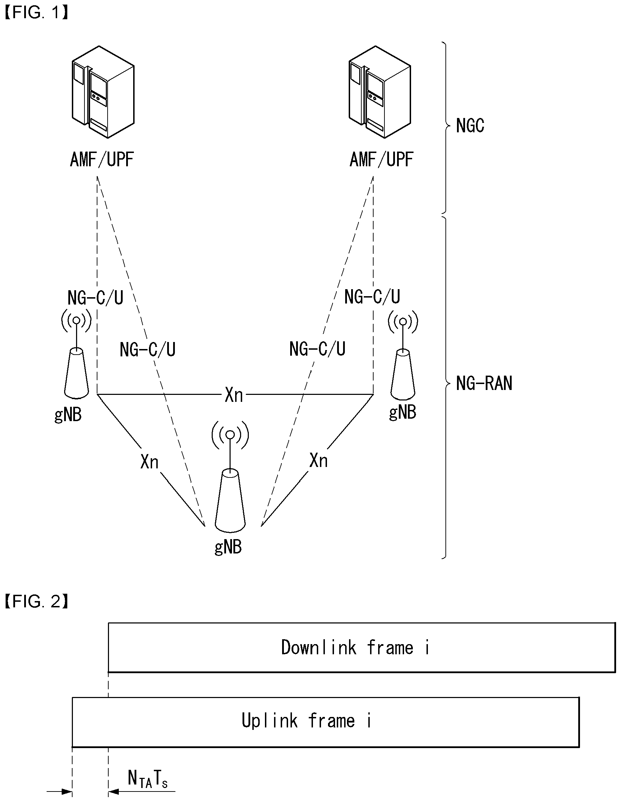

FIG. 1 illustrates an example of an overall structure of a NR system to which a method proposed in the present disclosure is applicable.

Referring to FIG. 1, an NG-RAN consists of gNBs that provide an NG-RA user plane (new AS sublayer/PDCP/RLC/MAC/PHY) and control plane (RRC) protocol terminations for a user equipment (UE).

The gNBs are interconnected with each other by means of an Xn interface.

The gNBs are also connected to an NGC by means of an NG interface.

More specifically, the gNBs are connected to an access and mobility management function (AMF) by means of an N2 interface and to a user plane function (UPF) by means of an N3 interface.

New Rat (NR) Numerology and Frame Structure

In the NR system, multiple numerologies may be supported. The numerologies may be defined by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15$ [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as frequency ranges of two types (FR1 and FR2). FR1 and FR2 may be configured as shown in Table 2 below. Further, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10$ms. The radio frame is composed of ten subframes each having a section of $T_{sf} = (\Delta f_{max} N_f/1000) \cdot T_s = 1$ ms. In this case, there may be a set of UL frames and a set of DL frames.

FIG. 2 illustrates a relation between an uplink frame and a downlink frame in a wireless communication system to which a method proposed in the present disclosure is applicable.

As illustrated in FIG. 2, uplink frame number i for transmission from a user equipment (UE) shall start $T_{TA} = N_{TA}T_s$ before the start of a corresponding downlink frame at the corresponding UE.

Regarding the numerology $\mu$, slots are numbered in increasing order of $n_s^\mu \in \left\{ 0,...,N_{\text{subframe}}^{\text{slots},\mu} - 1 \right\}$ within a subframe and are numbered in increasing order of $n_{s,f}^\mu \in \left\{ 0,...,N_{\text{frame}}^{\text{slots},\mu} - 1 \right\}$ within a radio frame. One slot consists of consecutive OFDM symbols of $N_{\text{symb}}^\mu$, and $N_{\text{symb}}^\mu$ is determined depending on a numerology used and slot configuration. The start of slots $n_s^\mu$ in a subframe is aligned in time with the start of OFDM symbols $n_s^\mu N_{\text{symb}}^\mu$ in the same subframe.

Not all UEs are able to transmit and receive at the same time, and this means that not all OFDM symbols in a downlink slot or an uplink slot are available to be used.

Table 3 represents the number $N_{\text{symb}}^{\text{slot}}$ of OFDM symbols per slot, the number $N_{\text{slot}}^{\text{frame},\mu}$ of slots per radio frame, and the number $N_{\text{slot}}^{\text{subframe},\mu}$ of slots per subframe in a normal CP. Table 4 represents the number of OFDM symbols per slot, the number of slots per radio frame, and the number of slots per subframe in an extended CP.

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

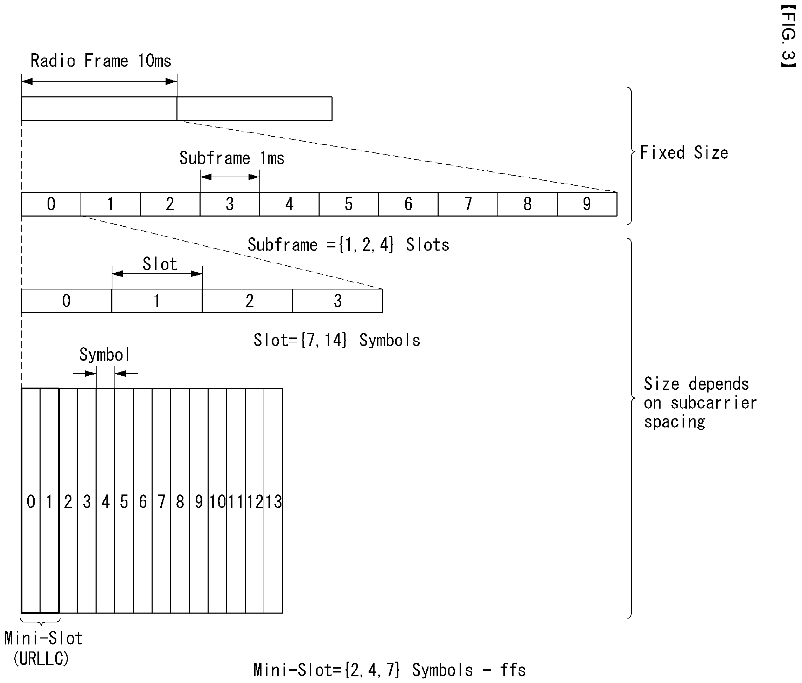

FIG. 3 illustrates an example of a frame structure in a NR system. FIG. 3 is merely for convenience of explanation and does not limit the scope of the present disclosure.

In Table 4, in case of $\mu$ =2, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

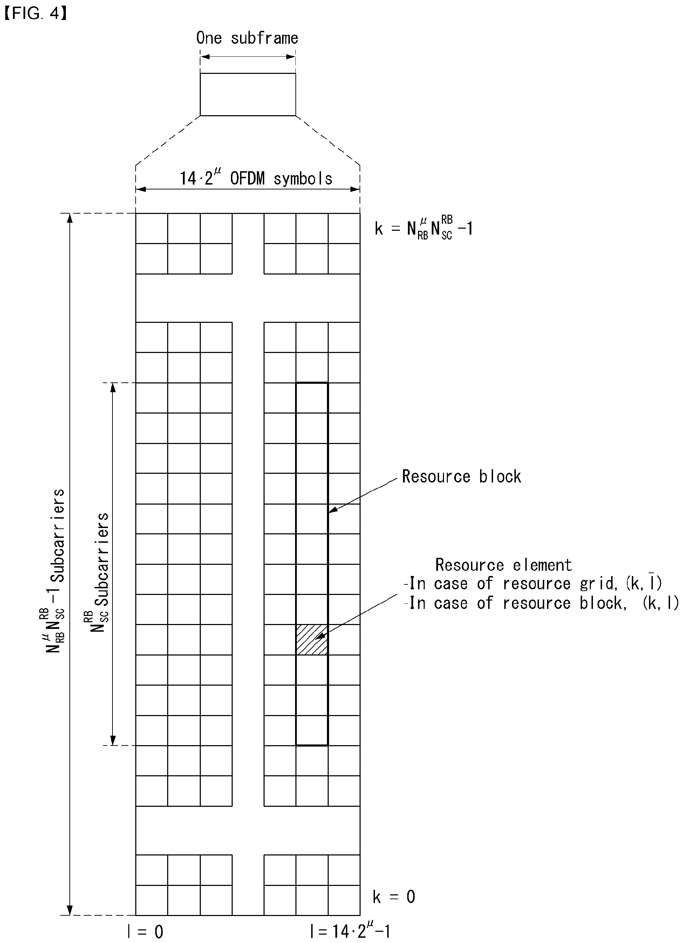

FIG. 4 illustrates an example of a resource grid supported in a wireless communication system to which a method proposed in the present disclosure is applicable.

Referring to FIG. 4, a resource grid consists of $N_{\text{RB}}^\mu N_{\text{sc}}^{\text{RB}}$ subcarriers on a frequency domain, each subframe consisting of 14·2μ OFDM symbols, but the present disclosure is not limited thereto.

In the NR system, a transmitted signal is described by one or more resource grids, consisting of $N_{RB}^{\mu} N_{sc}^{RB}$ subcarriers, and $2^{\mu} N_{symb}^{(\mu)}$ OFDM symbols, where $N_{RB}^{\mu} \leq N_{RB}^{max,\mu}$ . $N_{RB}^{max,\mu}$ denotes a maximum transmission bandwidth and may change not only between numerologies but also between uplink and downlink.

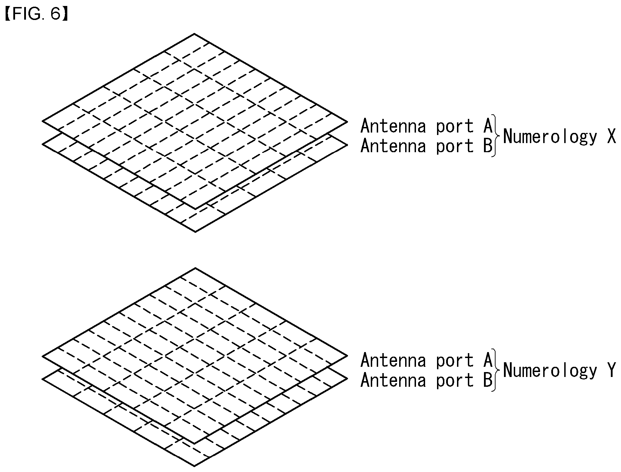

In this case, as illustrated in FIG. 6, one resource grid may be configured per numerology $\mu$ and antenna port p.

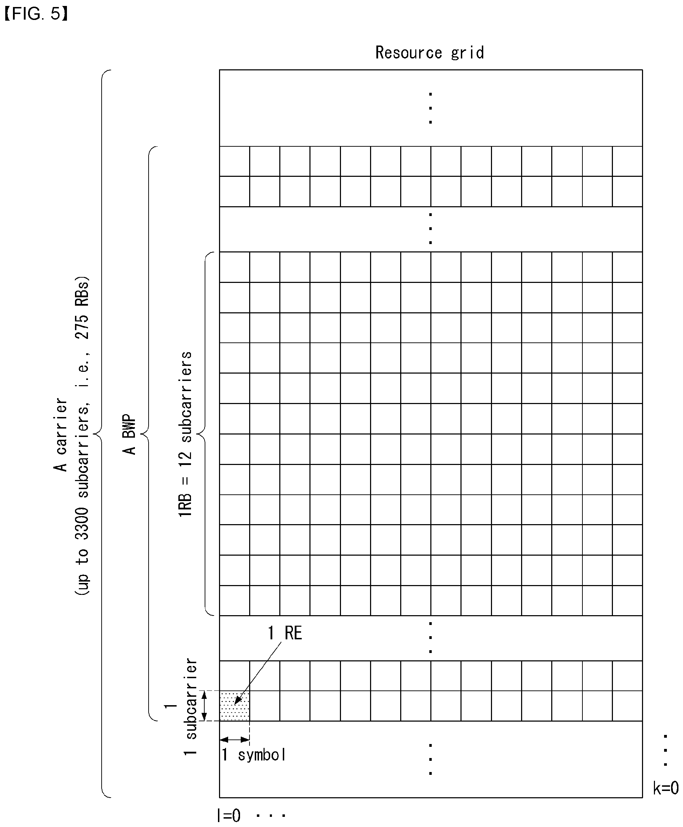

FIG. 5 illustrates a slot structure of an NR frame to which the method proposed in the present disclosure may be applied.

A slot includes a plurality of symbols in the time domain. For example, in the case of a normal CP, one slot includes 7 symbols, but in the case of an extended CP, one slot includes 6 symbols. A carrier includes a plurality of subcarriers in the frequency domain. A resource block (RB) is defined as a plurality of (e.g., 12) contiguous subcarriers in the frequency domain. A bandwidth part (BWP) is defined as a plurality of contiguous (P)RBs in the frequency domain, and may correspond to one numerology (e.g., SCS, CP length, etc.). The carrier may include up to N (e.g., 5) BWPs. Data communication may be performed through the activated BWP, and only one BWP may be activated for one terminal. Each element in the resource grid may be referred to as a resource element (RE), and one complex symbol may be mapped.

FIG. 6 illustrates examples of a resource grid per antenna port and numerology to which a method proposed in the disclosure is applicable.

Each element of the resource grid for the numerology $\mu$ and the antenna port p is called a resource element and is uniquely identified by an index pair $(k,\bar{l})$, where $k = 0,..., N_{RB}^{\mu} N_{sc}^{RB} - 1$ is an index on a frequency domain, and $\bar{l} = 0,..., 2^{\mu} N_{symb}^{(\mu)} - 1$ refers to a location of a symbol in a subframe. The index pair $(k,l)$ is used to refer to a resource element in a slot, where $l = 0,..., N_{symb}^{\mu} - 1$

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indices p and $\mu$ may be dropped, and as a result, the complex value may be $a_{k,\bar{l}}^{(p)}$ or $a_{k,\bar{l}}$.

Further, a physical resource block is defined as $N_{sc}^{RB} = 12$ consecutive subcarriers in the frequency domain.

Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN);

The common resource blocks are numbered from 0 and upwards in the frequency domain for subcarrier spacing configuration $\mu$ .

The center of subcarrier 0 of common resource block 0 for the subcarrier spacing configuration $\mu$ coincides with "point A". A common resource block number $n_{CRB}^{\mu}$ in the frequency domain and resource elements (k, l) for the subcarrier spacing configuration $\mu$ may be given by the following Equation 1.

[Equation 1]

$$n_{CRB}^{\mu} = \left\lfloor \frac{k}{N_{sc}^{RB}} \right\rfloor$$

Here, $k$ may be defined relative to the point A so that $k = 0$ corresponds to a subcarrier centered around the point A. Physical resource blocks are defined within a bandwidth part (BWP) and are numbered from 0 to $N_{BWP,i}^{size} - 1$ ,

where $i$ is No. Of the BWP. A relation between the physical resource block $n_{PRB}$ in BWP $i$ and the common resource block $n_{CRB}$ may be given by the following Equation 2.

[Equation 2]

$$n_{CRB} = n_{PRB} + N_{BWP,i}^{start}$$

Here, $N_{BWP,i}^{start}$ may be the common resource block where the BWP starts relative to the common resource block 0.

**Physical Channel and General Signal Transmission**

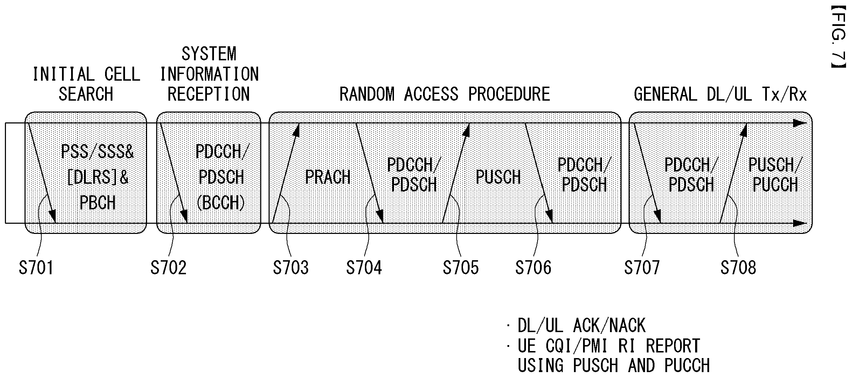

FIG. 7 illustrates physical channels and general signal transmission. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S701). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S702).

Meanwhile, when there is no radio resource first accessing the eNB or for signal transmission, the UE may perform a Random Access Procedure (RACH) to the eNB (S703 to S706). To this end, the UE may transmit a specific sequence to a preamble through a Physical Random Access Channel (PRACH) (S703 and S705) and receive a response message (Random Access Response (RAR) message) for the preamble through the PDCCH and a corresponding PDSCH. In the case of a contention based RACH, a Contention Resolution Procedure may be additionally performed (S706).

The UE that performs the above procedure may then perform PDCCH/PDSCH reception (S707) and Physical Uplink Shared Channel (PUSCH)/Physical Uplink Control Channel (PUCCH) transmission (S708) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

**Beam Management (BM)**

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.

- Beam measurement: Operation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS). Further, each BM procedure may include Tx beam sweeping for determining the Tx beam and Rx beam sweeping for determining the Rx beam.

**UL BM procedure**

A UL BM may be configured such that beam reciprocity (or beam correspondence) between Tx beam and Rx beam is established or not established depending on the UE implementation. If the beam reciprocity between Tx beam and Rx beam is established in both a base station and a UE, a UL beam pair may be adjusted via a DL beam pair. However, if the beam reciprocity between Tx beam and Rx beam is not established in any one of the base station and the UE, a process for determining the UL beam pair is necessary separately from determining the DL beam pair.

Even when both the base station and the UE maintain the beam correspondence, the base station may use a UL BM procedure for determining the DL Tx beam even if the UE does not request a report of a (preferred) beam.

The UM BM may be performed via beamformed UL SRS transmission, and whether to apply UL BM of an SRS resource set is configured by the (higher layer parameter) usage. If the usage is set to 'BeamManagement (BM)', only one SRS resource may be transmitted to each of a plurality of SRS resource sets in a given time instant.

The UE may be configured with one or more sounding reference symbol (SRS) resource sets configured by (higher layer parameter) SRS-ResourceSet (via higher layer signaling, RRC signaling, etc.). For each SRS resource set, the UE may be configured with $K \geq 1$ SRS resources (higher later parameter SRS-resource), where K is a natural number, and a maximum value of K is indicated by SRS_capability.

In the same manner as the DL BM, the UL BM procedure may be divided into a UE's Tx beam sweeping and a base station's Rx beam sweeping.

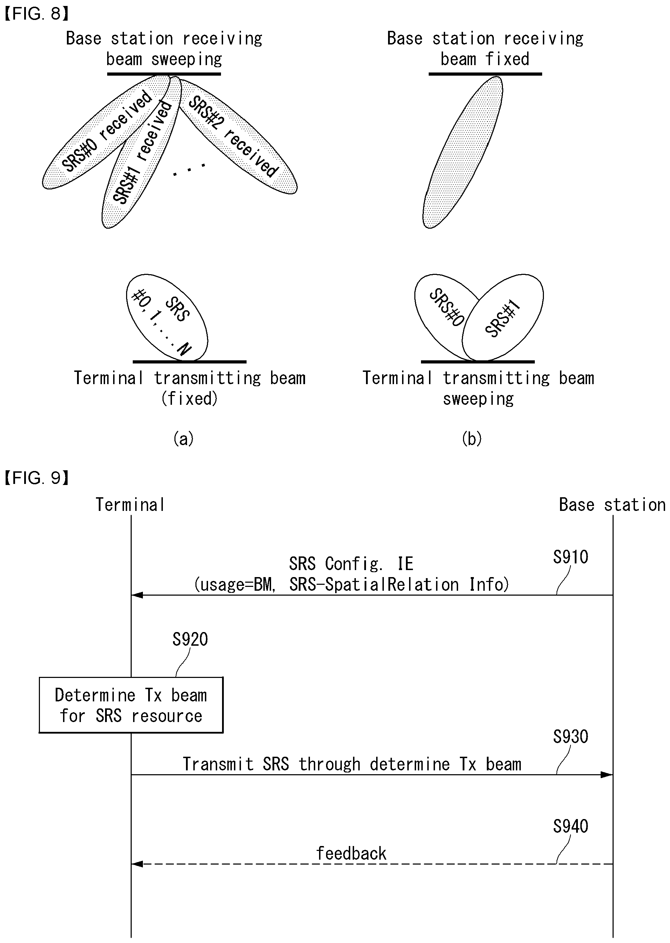

FIG. 8 shows an example of a UL BM procedure using SRS.

(a) of FIG. 8 shows a Rx beam determination procedure of the BS, and (b) of FIG. 9 shows a Tx beam sweeping procedure of the UE.

FIG. 9 is a flowchart illustrating an example of a UL BM procedure using SRS.

- The UE receives, from the base station, RRC signaling (e.g., SRS-Config IE) including (higher layer parameter) usage parameter set to 'beam management' in S9100.

Table 5 represents an example of SRS-Config information element (IE), and the SRS-Config IE is used for SRS transmission configuration. The SRS-Config IE contains a list of SRS-Resources and a list of SRS-Resource sets. Each SRS resource set means a set of SRS resources.

The network may trigger transmission of the SRS resource set using configured aperiodicSRS-ResourceTrigger (L1 DCI).

【Table 5】

```
-- ASN1START

-- TAG-SRS-CONFIG-START


SRS-Config ::=                          SEQUENCE {
    srs-ResourceSetToReleaseList                        SEQUENCE
(SIZE(1..maxNrofSRS-ResourceSets))       OF        SRS-ResourceSetId
OPTIONAL,      -- Need N
    srs-ResourceSetToAddModList                         SEQUENCE
(SIZE(1..maxNrofSRS-ResourceSets))       OF        SRS-ResourceSet
```

```
OPTIONAL,      -- Need N

        srs-ResourceToReleaseList                                                   SEQUENCE
(SIZE(1..maxNrofSRS-Resources))              OF              SRS-ResourceId

OPTIONAL,      -- Need N

        srs-ResourceToAddModList                                                    SEQUENCE
(SIZE(1..maxNrofSRS-Resources))              OF              SRS-Resource

OPTIONAL,      -- Need N

        tpc-Accumulation                                  ENUMERATED {disabled}

OPTIONAL,      -- Need S

        ...,

        [[

        srs-RequestForDCI-Format1-2-r16                               INTEGER   (1..2)

OPTIONAL,      -- Need S

        srs-RequestForDCI-Format0-2-r16                               INTEGER   (1..2)

OPTIONAL,      -- Need S

        srs-ResourceSetToAddModListForDCI-Format0-2-r16                   SEQUENCE
(SIZE(1..maxNrofSRS-ResourceSets))              OF              SRS-ResourceSet

OPTIONAL, -- Need N

        srs-ResourceSetToReleaseListForDCI-Format0-2-r16                  SEQUENCE
(SIZE(1..maxNrofSRS-ResourceSets))              OF              SRS-ResourceSetId

OPTIONAL,-- Need N

        srs-PosResourceSetToReleaseList-r16                               SEQUENCE
(SIZE(1..maxNrofSRS-PosResourceSets-r16)) OF SRS-PosResourceSetId-r16


OPTIONAL,      -- Need N
```

```
        srs-PosResourceSetToAddModList-r16                                    SEQUENCE
(SIZE(1..maxNrofSRS-PosResourceSets-r16))        OF      SRS-PosResourceSet-r16
OPTIONAL,-- Need N

        srs-PosResourceToReleaseList-r16                                      SEQUENCE
(SIZE(1..maxNrofSRS-PosResources-r16))           OF       SRS-PosResourceId-r16
OPTIONAL,-- Need N

        srs-PosResourceToAddModList-r16                                       SEQUENCE
(SIZE(1..maxNrofSRS-PosResources-r16))           OF       SRS-PosResource-r16
OPTIONAL        -- Need N

        ]]

    }


    SRS-ResourceSet ::=                          SEQUENCE {
        srs-ResourceSetId                            SRS-ResourceSetId,
        srs-ResourceIdList                                                    SEQUENCE
(SIZE(1..maxNrofSRS-ResourcesPerSet))            OF               SRS-ResourceId
OPTIONAL, -- Cond Setup
        resourceType                                 CHOICE {
            aperiodic                                SEQUENCE {
                aperiodicSRS-ResourceTrigger                                  INTEGER
(1..maxNrofSRS-TriggerStates-1),
                csi-RS                                                        NZP-CSI-RS-
ResourceId                                       OPTIONAL, --
Cond NonCodebook
                slotOffset                                   INTEGER (1..32)
```

```
OPTIONAL, -- Need S

                        ...,

                    [[

                    aperiodicSRS-ResourceTriggerList                    SEQUENCE
(SIZE(1..maxNrofSRS-TriggerStates-2))

                                                            OF

INTEGER (1..maxNrofSRS-TriggerStates-1)   OPTIONAL   -- Need M

                    ]]
                },
                semi-persistent                         SEQUENCE {
                    associatedCSI-RS                             NZP-CSI-RS-
ResourceId                                                  OPTIONAL, --
Cond NonCodebook

                    ...

                },
                periodic                                SEQUENCE {
                    associatedCSI-RS                             NZP-CSI-RS-
ResourceId                                                  OPTIONAL, --
Cond NonCodebook

                    ...

                }
            },
            usage                                       ENUMERATED
{beamManagement, codebook, nonCodebook, antennaSwitching},
            alpha                                               Alpha
```

```
OPTIONAL, -- Need S

    p0                                              INTEGER  (-202..24)
OPTIONAL, -- Cond Setup

    pathlossReferenceRS                    PathlossReferenceRS-Config
OPTIONAL, -- Need M

    srs-PowerControlAdjustmentStates       ENUMERATED { sameAsFci2,
separateClosedLoop}                                 OPTIONAL,  -- Need
S

    ...,

    [[

    pathlossReferenceRSList-r16                              SetupRelease
{                                           PathlossReferenceRSList-r16}
OPTIONAL    -- Need M

    ]]

  }


  PathlossReferenceRS-Config ::=               CHOICE {
    ssb-Index                                     SSB-Index,
    csi-RS-Index                                  NZP-CSI-RS-ResourceId
  }


  PathlossReferenceRSList-r16   ::=                   SEQUENCE  (SIZE
(1..maxNrofSRS-PathlossReferenceRS-r16)) OF PathlossReferenceRS-r16


  PathlossReferenceRS-r16 ::=                  SEQUENCE {
```

```
        srs-PathlossReferenceRS-Id-r16                    SRS-PathlossReferenceRS-
Id-r16,

        pathlossReferenceRS-r16                           PathlossReferenceRS-
Config

    }


    SRS-PathlossReferenceRS-Id-r16 ::=                INTEGER  (0..maxNrofSRS-
PathlossReferenceRS-1-r16)


    SRS-PosResourceSet-r16 ::=                       SEQUENCE {
        srs-PosResourceSetId-r16                           SRS-PosResourceSetId-
r16,

        srs-PosResourceIdList-r16                                    SEQUENCE
(SIZE(1..maxNrofSRS-ResourcesPerSet)) OF SRS-PosResourceId-r16


OPTIONAL, -- Cond Setup
        resourceType-r16                             CHOICE {
            aperiodic-r16                                SEQUENCE {
                aperiodicSRS-ResourceTriggerList-r16                   SEQUENCE
(SIZE(1..maxNrofSRS-TriggerStates-1))

                                                             OF
INTEGER (1..maxNrofSRS-TriggerStates-1)                    OPTIONAL, --
Need M

                ...
            },
```

```
        semi-persistent-r16                           SEQUENCE {

                ...

        },

        periodic-r16                                  SEQUENCE {

                ...

        }

    },

    alpha-r16                                                    Alpha
OPTIONAL, -- Need S

    p0-r16                                          INTEGER  (-202..24)
OPTIONAL, -- Cond Setup

    pathlossReferenceRS-Pos-r16                   CHOICE {

        ssb-IndexServing-r16                          SSB-Index,

        ssb-Ncell-r16                                 SSB-InfoNcell-r16,

        dl-PRS-r16                                    DL-PRS-Info-r16

    }
OPTIONAL, -- Need M

        ...

    }


  SRS-ResourceSetId  ::=                        INTEGER  (0..maxNrofSRS-
ResourceSets-1)


  SRS-PosResourceSetId-r16  ::=                 INTEGER  (0..maxNrofSRS-
PosResourceSets-1-r16)
```

```
SRS-Resource ::=                          SEQUENCE {

    srs-ResourceId                            SRS-ResourceId,

    nrofSRS-Ports                             ENUMERATED {port1, ports2,
ports4},

    ptrs-PortIndex                            ENUMERATED {n0, n1 }
OPTIONAL,     -- Need R

    transmissionComb                          CHOICE {

        n2                                        SEQUENCE {

            combOffset-n2                             INTEGER (0..1),

            cyclicShift-n2                            INTEGER (0..7)

        },

        n4                                        SEQUENCE {

            combOffset-n4                             INTEGER (0..3),

            cyclicShift-n4                            INTEGER (0..11)

        }

    },

    resourceMapping                           SEQUENCE {

        startPosition                             INTEGER (0..5),

        nrofSymbols                               ENUMERATED {n1, n2,
n4},

        repetitionFactor                          ENUMERATED {n1, n2, n4}

    },

    freqDomainPosition                        INTEGER (0..67),

    freqDomainShift                           INTEGER (0..268),
```

```
        freqHopping                         SEQUENCE {
            c-SRS                               INTEGER (0..63),
            b-SRS                               INTEGER (0..3),
            b-hop                               INTEGER (0..3)
        },
        groupOrSequenceHopping              ENUMERATED { neither,
groupHopping, sequenceHopping },
        resourceType                        CHOICE {
            aperiodic                           SEQUENCE {
                ...
            },
            semi-persistent                     SEQUENCE {
                periodicityAndOffset-sp                         SRS-
PeriodicityAndOffset,
                ...
            },
            periodic                            SEQUENCE {
                periodicityAndOffset-p                          SRS-
PeriodicityAndOffset,
                ...
            }
        },
        sequenceId                          INTEGER (0..1023),
        spatialRelationInfo                     SRS-SpatialRelationInfo
OPTIONAL,     -- Need R
```

```
        ...,

        [[

        resourceMapping-r16              SEQUENCE {

                startPosition-r16                INTEGER (0..13),

                nrofSymbols-r16                    ENUMERATED {n1, n2,
n4},

                repetitionFactor-r16            ENUMERATED {n1, n2, n4}

        }

OPTIONAL      -- Need R

        ]]


    }


    SRS-PosResource-r16::=          SEQUENCE {

        srs-PosResourceId-r16           SRS-PosResourceId-r16,

        transmissionComb-r16            CHOICE {

            n2-r16                          SEQUENCE {

                combOffset-n2-r16               INTEGER (0..1),

                cyclicShift-n2-r16              INTEGER (0..7)

            },

            n4-r16                          SEQUENCE {

                combOffset-n4-16                INTEGER (0..3),

                cyclicShift-n4-r16              INTEGER (0..11)

            },

            n8-r16                          SEQUENCE {
```

```
                combOffset-n8-r16                           INTEGER (0..7),

                cyclicShift-n8-r16                          INTEGER (0..5)

        },

        ...

    },

    resourceMapping-r16                          SEQUENCE {

        startPosition-r16                            INTEGER (0..13),

        nrofSymbols-r16                              ENUMERATED {n1,
n2, n4, n8, n12}

    },

    freqDomainShift-r16                      INTEGER (0..268),

    freqHopping-r16                          SEQUENCE {

        c-SRS-r16                                INTEGER (0..63),

        ...

    },

    groupOrSequenceHopping-r16                   ENUMERATED { neither,
groupHopping, sequenceHopping },

    resourceType-r16                         CHOICE {

        aperiodic-r16                            SEQUENCE {

            slotOffset-r16                           INTEGER (1..32)
OPTIONAL,     -- Need S

            ...

        },

        semi-persistent-r16                      SEQUENCE {

            periodicityAndOffset-sp-r16                          SRS-
```

```
PeriodicityAndOffset-r16,

            ...

        },

        periodic-r16                          SEQUENCE {

            periodicityAndOffset-p-r16                          SRS-
PeriodicityAndOffset-r16,

            ...

        }

    },

    sequenceId-r16                        INTEGER (0..65535),

    spatialRelationInfoPos-r16            SRS-SpatialRelationInfoPos-r16
OPTIONAL,     -- Need R

        ...

  }


SRS-SpatialRelationInfo ::=      SEQUENCE {

    servingCellId                              ServCellIndex
OPTIONAL,     -- Need S

    referenceSignal                    CHOICE {

        ssb-Index                              SSB-Index,

        csi-RS-Index                           NZP-CSI-RS-ResourceId,

        srs                                    SEQUENCE {

            resourceId                         SRS-ResourceId,

            uplinkBWP                          BWP-Id

        }
```

```
            }

        }


    SRS-SpatialRelationInfoPos-r16 ::=        CHOICE {
        servingRS-r16                              SEQUENCE {
            servingCellId                                   ServCellIndex
OPTIONAL,       -- Need S
            referenceSignal-r16                     CHOICE {
                ssb-IndexServing-r16                    SSB-Index,
                csi-RS-IndexServing-r16                     NZP-CSI-RS-
ResourceId,
                srs-SpatialRelation-r16                 SEQUENCE {
                    resourceSelection-r16                   CHOICE {
                        srs-ResourceId-r16                          SRS-
ResourceId,
                        srs-PosResourceId-r16                       SRS-
PosResourceId-r16
                    },
                    uplinkBWP-r16                           BWP-Id
                }
            }
        },
        ssb-Ncell-r16                           SSB-InfoNcell-r16,
        dl-PRS-r16                              DL-PRS-Info-r16
    }
```

```
SSB-Configuration-r16   ::=              SEQUENCE {

    ssb-Freq-r16                         ARFCN-ValueNR,

    halfFrameIndex-r16                       ENUMERATED {zero, one},

    ssbSubcarrierSpacing-r16                 SubcarrierSpacing,

    ssb-Periodicity-r16                      ENUMERATED { ms5, ms10, ms20,
ms40, ms80, ms160, spare2,spare1 }   OPTIONAL, -- Need S

    sfn0-Offset-r16                          SEQUENCE {

        sfn-Offset-r16                           INTEGER (0..1023),

        integerSubframeOffset-r16                        INTEGER   (0..9)
OPTIONAL   -- Need R

        }
OPTIONAL, -- Need R

    sfn-SSB-Offset-r16               INTEGER (0..15),

    ss-PBCH-BlockPower-r16                        INTEGER   (-60..50)
OPTIONAL   -- Cond Pathloss

    }


SSB-InfoNcell-r16   ::=              SEQUENCE {

    physicalCellId-r16                  PhysCellId,

    ssb-IndexNcell-r16                                       SSB-Index
OPTIONAL, -- Need S

    ssb-Configuration-r16                        SSB-Configuration-r16
OPTIONAL   -- Need S

    }
```

```
DL-PRS-Info-r16   ::=              SEQUENCE {

    dl-PRS-ID-r16                  INTEGER (0..255),

    dl-PRS-ResourceSetId-r16       INTEGER (0..7),

    dl-PRS-ResourceId-r16                              INTEGER   (0..63)
OPTIONAL   -- Need S

    }


    SRS-ResourceId  ::=                        INTEGER  (0..maxNrofSRS-
Resources-1)

    SRS-PosResourceId-r16  ::=                 INTEGER  (0..maxNrofSRS-
PosResources-1-r16)


    SRS-PeriodicityAndOffset ::=      CHOICE {

        sl1                              NULL,

        sl2                              INTEGER(0..1),

        sl4                              INTEGER(0..3),

        sl5                              INTEGER(0..4),

        sl8                              INTEGER(0..7),

        sl10                             INTEGER(0..9),

        sl16                             INTEGER(0..15),

        sl20                             INTEGER(0..19),

        sl32                             INTEGER(0..31),

        sl40                             INTEGER(0..39),

        sl64                             INTEGER(0..63),
```

```
        sl80                            INTEGER(0..79),

        sl160                           INTEGER(0..159),

        sl320                           INTEGER(0..319),

        sl640                           INTEGER(0..639),

        sl1280                          INTEGER(0..1279),

        sl2560                          INTEGER(0..2559)

}


SRS-PeriodicityAndOffset-r16 ::=        CHOICE {

        sl1                             NULL,

        sl2                             INTEGER(0..1),

        sl4                             INTEGER(0..3),

        sl5                             INTEGER(0..4),

        sl8                             INTEGER(0..7),

        sl10                            INTEGER(0..9),

        sl16                            INTEGER(0..15),

        sl20                            INTEGER(0..19),

        sl32                            INTEGER(0..31),

        sl40                            INTEGER(0..39),

        sl64                            INTEGER(0..63),

        sl80                            INTEGER(0..79),

        sl160                           INTEGER(0..159),

        sl320                           INTEGER(0..319),

        sl640                           INTEGER(0..639),

        sl1280                          INTEGER(0..1279),
```

```
        sl2560                          INTEGER(0..2559),

        sl5120                          INTEGER(0..5119),

        sl10240                         INTEGER(0..10239),

        sl40960                         INTEGER(0..40959),

        sl81920                         INTEGER(0..81919),

        ...

    }


    -- TAG-SRS-CONFIG-STOP

    -- ASN1STOP
```

In Table 5, usage refers to a higher layer parameter to indicate whether the SRS resource set is used for beam management or is used for codebook based or non-codebook based transmission. As an example, the present disclosure proposes a usage indicating or representing whether the SRS resource set is used for beam management, or used for codebook based or non-codebook based transmission, used for antenna switching, or used for frequency tracking (e.g., freqTracking). A usage parameter corresponds to the L1 parameter 'SRS-SetUse'. 'spatialRelationInfo' is a parameter representing a configuration between a reference RS and a target SRS. Here, the reference RS may be SSB, CSI-RS, or SRS corresponding to the L1 parameter 'SRS-SpatialRelationInfo'. The usage is configured for each SRS resource set. 'servingCellId' is a parameter representing the serving cell ID of source SSB, CSI-RS or SRS for a spatial relation of the target SRS resource.

In addition, 'nrofSRS-Ports' of the SRS-Resource field is a parameter representing the number of antenna ports. 'periodicityAndOffset-p' and 'periodicityAndOffset-sp' of the SRS-Resource field are parameters representing a periodicity and a slot offset for the corresponding SRS resource. 'ptrs-PortIndex' of the SRS-Resource field is a parameter representing a PTRS port index for an SRS resource for non-codbook based UL MIMO. 'resourceMapping' of the SRS-Resource field is a parameter representing an OFDM symbol position of the SRS resource in the slot including nrof-Symbols (the number of OFDM symbols), startPosition (value 0 refers to a last symbol and value 1 refers to a second last symbol), and repetitionFactor. Here, the configured SRS resource does not exceed a slot boundary. 'resourceType' of the SRS-Resource field is a parameter representing the periodicity and the offset for semi-persistent and periodic SRS resources. 'transmissionComb' of the SRS-Resource field is a parameter representing a comb value (2, 4, or 8) and a comb offset (0...combValue-1).

'pathlossReferenceRS' of the SRS-Resource set field is a parameter representing a reference signal used for SRS path loss estimation. 'pathlossReferenceRSList' of the SRS-Resource set field is a parameter representing a plurality of candidate pathloss reference RS(s) for SRS power control. 'resourceType' of the SRS-Resource set field is a parameter representing a time domain behavior of an SRS resource configuration. 'slotOffset' of the SRS-Resource set field is a parameter representing the number of slots (offsets) between triggering DCI and actual transmission of the SRS-ResourceSet. 'srs-ResourceIdList' of the SRS-Resource set field is a parameter representing IDs of SRS-Resources used in the SRS-ResourceSet. 'srs-ResourceSetId' of the SRS-Resource set field is a parameter representing the ID of the corresponding resource set.

- The UE determines the Tx beam for the SRS resource to be transmitted based on SRS-SpatialRelation Info contained in the SRS-Config IE in S920. The SRS-SpatialRelation Info is configured per SRS resource and indicates whether to apply the same beam as the beam used for SSB, CSI-RS, or SRS per SRS resource. Further, SRS-SpatialRelationInfo may be configured or not configured in each SRS resource.

If the SRS-SpatialRelationInfo is configured in the SRS resource, the same beam as the beam used for SSB, CSI-RS or SRS is applied for transmission. However, if the SRS-SpatialRelationInfo is not configured in the SRS resource, the UE randomly determines the Tx beam and transmits the SRS via the determined Tx beam in S1130.

More specifically, for P-SRS with 'SRS-ResourceConfigType' set to 'periodic':

i) if SRS-SpatialRelationInfo is set to 'SSB/PBCH,' the UE transmits the corresponding SRS resource with the same spatial domain transmission filter (or generated from the corresponding filter) as the spatial domain Rx filter used for the reception of the SSB/PBCH; or

ii) if SRS-SpatialRelationInfo is set to 'CSI-RS,' the UE transmits the SRS resource with the same spatial domain transmission filter used for the reception of the periodic CSI-RS or SP CSI-RS; or

iii) if SRS-SpatialRelationInfo is set to 'SRS,' the UE transmits the SRS resource with the same spatial domain transmission filter used for the transmission of the periodic SRS.

'Even if 'SRS-ResourceConfigType' is set to 'SP-SRS' or 'AP-SRS,' the beam determination and transmission operations may be applied similar to the above.

Additionally, the UE may receive or may not receive feedback for the SRS from the base station, as in the following three cases in S940.

i) If Spatial_Relation_Info is configured for all the SRS resources within the SRS resource set, the UE transmits the SRS with the beam indicated by the base station. For example, if the Spatial_Relation_Info indicates all the same SSB, CRI, or SRI, the UE repeatedly transmits the SRS with the same beam. This case corresponds to (a) of FIG. 8 as the usage for the base station to select the Rx beam.

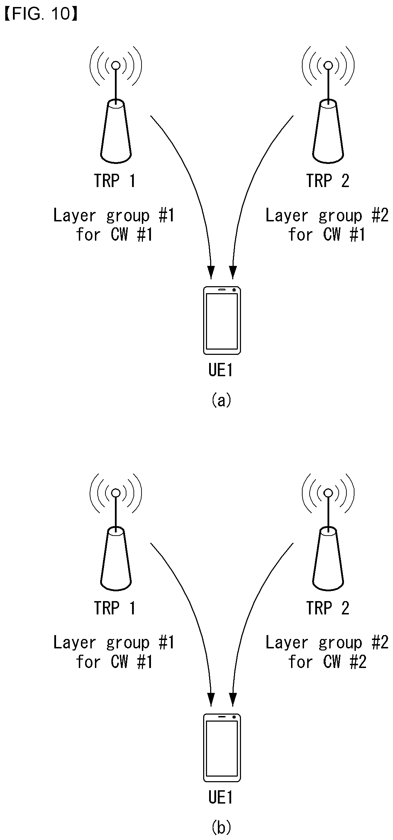

ii) The Spatial_Relation_Info may not be configured for all the SRS resources within the SRS resource set. In this case, the UE may perform transmission while freely changing SRS beams. That is, this case corresponds to (b) of FIG. 10 as the usage for the UE to sweep the Tx beam.

iii) The Spatial_Relation_Info may be configured for only some SRS resources within the SRS resource set. In this case, the UE may transmit the configured SRS resources with the indicated beam, and transmit the SRS resources, for which Spatial_Relation_Info is not configured, by randomly applying the Tx beam.

## Multiple Transmission and Reception Point (TRP)-related Operation

The coordinated multi point (CoMP) technique is a scheme in a plurality of base stations exchange (e.g., use X2 interface) or utilize channel information (e.g., RI/CQI/PMI/LI, etc.) fed back from the user equipment (UE) to perform cooperative transmission with the UE, thereby effectively controlling interference. According to the scheme used, the cooperative transmission may be divided into joint transmission (JT), coordinated scheduling (CS), coordinated beamforming (CB), dynamic point selection (DPS), dynamic point blacking (DPB), and the like.

## Multiple TRP (M-TRP) transmission

The M-TRP transmission scheme in which M TRPs transmit data to one user equipment (UE) may be divided into two, that is, eMBB M-TRP transmission, which is a scheme for significantly increasing a transmission rate, and URLLC M-TRP transmission, which is a scheme for increasing a reception success rate and reducing delay.

In addition, from the perspective of the downlink control information (DCI) transmission, the multiple TRP (M-TRP) transmission scheme may be divided into i) a multiple DCI (M-DCI) based M-TRP transmission method in which each TRP transmits a different DCI and ii) a single DCI (S-DCI) based M-TRP transmission method in which one TRP transmits DCI. For example, in the case of the S-DCI, since all scheduling information for data transmitted by the M TRP needs to be transmitted through one DCI, and therefore, may be used in an ideal backhaul (HackHaul, BH) environment that enables dynamic cooperation between two TRPs.

Standardization of scheme 3/4 is under discussion in TDM based URLLC. As an example, scheme 4 means a scheme in which one TRP transmits a TB in one slot, and has the effect of increasing the data reception probability through the same TB received from several TRPs in several slots. On the other hand, scheme 3 means a scheme in which one TRP transmits a TB through several consecutive OFDM symbols (that is, a symbol group), and may be configured so that several TRPs in one slot transmit the same TB through different symbol groups.

In addition, the UE may recognize a PDSCH/PUSCH (or PUCCH), which is scheduled by the DCI received with different CORESETs (or CORESETs belonging to different CORESET groups/pools), as a PDSCH received from different TRPs or a PUSCH (or PUCCH) transmitted to different TRPs. That is, according to information (e.g., index) on the CORESET group/pool, the UE may distinguish or identify the TRP to be transmitted and received to/and from itself. In addition, the scheme for UL transmission (e.g., PUSCH/PUCCH) transmitted to different TRPs may be equally applied to UL transmission (e.g., PUSCH/PUCCH) transmitted to different panels belonging to the same TRP.

In addition, MTRP-URLLC may mean that the same transport block (TB) is transmitted using a different layer/time/frequency of the M-TRP. It may be assumed that a UE configured with the MTRP-URLLC transmission scheme is indicated with several TCI state(s) by DCI, and data received using the QCL RS of each TCI state are the same TB. On the other hand, MTRP-eMBB may mean that the M-TRP transmits different TBs using different layers/times/frequencies. It may be assumed that the UE configured for the MTRP-eMBB transmission scheme is indicated with several TCI state(s) by the DCI, and data received using the QCL RS of each TCI state is a different TB. In this regard, as the UE separately uses the RNTI configured for an MTRP-URLLC usage and the RNTI configured for an MTRP-eMBB usage, the UE may determine/decide whether the corresponding M-TRP transmission is URLLC transmission or eMBB transmission. That is, when CRC masking of DCI received by the terminal is performed using the RNTI configured for the MTRP-URLLC usage, this may correspond to the URLLC transmission, and when the CRC masking of the DCI is performed using the RNTI configured for the MTRP-eMBB usage, this may correspond to the eMBB transmission.

Hereinafter, the CORESET group ID described/mentioned in the present disclosure may mean index/identification information (e.g., ID) for distinguishing the CORESET for each TRP/panel, etc. In addition, the CORESET group may be a group/union of the CORESET distinguished by the index/identification information (e.g., ID) for distinguishing the CORESET for each TRP/panel/the CORESET group ID. As an example, the CORESET group ID may be specific index information defined in the CORSET configuration. As an example, the CORESET group may be configured/indicated/defined by an index defined in the CORESET configuration for each CORESET. And/or the CORESET group ID may mean an index/identification information/indicator, etc. for distinguishing/identifying CORESETs configured/related to each TRP/panel, and the CORESET group ID described/mentioned in the present disclosure may be replaced and expressed as a specific index/specific identification information/specific indicator for distinguishing/identifying the CORESETs configured/related to each TRP/panel. The CORESET group ID, i.e., the specific index/specific identification information/specific indicator for distinguishing/identifying the CORESETs configured/related to each TRP/panel may be configured/indicated through a higher layer signaling (e.g., RRC signaling)/L2 signaling (e.g., MAC-CE)/L1 signaling (e.g., DCI). As an example, PDCCH detection for each TRP/panel may be configured/indicated to be performed in units of the corresponding CORESET group, and/or uplink control information (e.g., CSI, HARQ-A/N, SR) and/or uplink physical channel resources (e.g., PUCCH/PRACH/SRS resources) may be configured/indicated to be separated, and managed/controlled for each TRP/panel in units of the corresponding CORESET group, and/or HARQ A/N (process/retransmission) for the PDSCH/PUSCH scheduled for each TRP/panel may be managed in units of the corresponding CORESET group.

For example, ControlResourceSet IE (information element), which is a higher layer parameter, is used to configure a time/frequency control resource set (CORESET). As an example, the control resource set (CORESET) may be related to detection and reception of downlink control information. The ControlResourceSet IE may include CORESET related ID (e.g., controlResourceSetID)/CORESET pool index (e.g., CORESETPoolIndex) for CORESET/time/frequency resource configuration of CORESET/TCI information related to the CORESET. As an example, the CORESET pool index (e.g., CORESETPoolIndex) may be configured to 0 or 1. In the above description, the CORESET group may correspond to the CORESET pool, and the CORESET group ID may correspond to the CORESET pool index (e.g., CORESETPoolIndex).

**Multiple DCI based/single DCI based cooperative transmission**

Non-coherent joint transmission (NCJT) is a method in which multiple transmission points (TPs) transmit data to one user equipment (UE) using the same time frequency, and transmits data to different layers using different DMRS (Demodulation Multiplexing Reference Signal) ports between TPs. The TP transmits the data scheduling information to the UE receiving the NCJT as the downlink control information (DCI). In this case, a scheme in which each TP participating in the NCJT transmits scheduling information for data transmitted by itself to the DCI may be referred to as multi DCI based cooperative transmission. Since each of N TPs participating in the NCJT transmission transmit DL grants (i.e., DL DCI) and PDSCH to the UE, the UE receives N DCIs and N PDSCHs through N TPs. On the other hand, a scheme in which one representative TP transmits scheduling information for data transmitted by itself and data transmitted by another TP to one DCI may be referred to as single DCI based cooperative transmission (e.g., single DCI based NCJT). In this case, N TPs transmit one PDSCH, but each TP transmits only some layers among multiple layers constituting one PDSCH. For example, when 4 layer data is transmitted, TP 1 may transmit 2 layers and TP 2 may transmit the remaining 2 layers to the UE.

Description of partially overlapped NCJT

In addition, NCJT is divided into two types: fully overlapped NCJT, in which time and frequency resources transmitted by each TP completely are overlapped, and partially overlapped NCJT, in which only some time and frequency resources are overlapped. That is, in the case of the partially overlapped NCJT, both transmission data of TP 1 and TP2 are transmitted in some time-frequency resources, and only one TP among TP 1 or TP 2 transmits data in the remaining time-frequency resources.

Reliability enhancement method in Multi-TRP

Two schemes below may be considered as a transmission/reception method for improving reliability using multi-TRP-based transmissions. FIG.10 illustrates examples of improving reliability using multi-TRP-based transmissions

FIG. 10(a) illustrates an example of a case in which the layer group transmitting the same codeword (CW)/transport block (TB) corresponds to different TRPs. In this case, the layer group may mean a layer set including one or more layers. In this case, there is an advantage in that the amount of transmission resources increases due to the number of layers, and thus, (robust) channel coding of a low code rate may be used for the transport block (TB). In addition, since the channels transmitted from a plurality of TRPs are different, it can be expected to improve the reliability of the received signal based on the diversity gain.

FIG. 12(b) illustrates an example of transmitting different CWs through layer groups corresponding to different TRPs. In this case, it may be assumed that TBs corresponding to a first CW (CW #1) and a second CW (CW #2) are the same. Accordingly, the scheme illustrated in FIG. 12(b) can be viewed as an example of repeated transmission of the same TB. In the case of FIG. 12(b), the code rate corresponding to the TB may be higher than that of FIG. 13(a). However, according to the channel environment, the code rate may be adjusted by indicating different redundancy version (RV) values for encoding bits generated from the same TB, or the modulation order of each CW can be adjusted.

In FIG. 10(a)/(b), as the same TB is repeatedly transmitted through different layer groups and different TRPs/panels transmit each layer group, the data reception probability may be increased, and this is named as an M-TRP URLLC transmission scheme. Layers belonging to different layer groups are transmitted through DMRS ports belonging to different DMRS CDM groups, respectively.

In addition, although the above-mentioned contents related to multiple TRPs have been described based on a spatial division multiplexing (SDM) scheme using different layers, it goes without saying that this may be extended and applied even to a frequency division (FDM) scheme based on different frequency domain resources (e.g., RB/PRB (set)) and/or a time division multiplexing (TDM) scheme based on different time domain resources (e.g., slot, symbol, sub-symbol).

In the present disclosure, TRP may mean an antenna array having one or more antenna elements available in a network located at a specific geographic location in a specific area. In the present disclosure, it is described based on "TRP" for convenience of description, but as described above, the TRP may be replaced, and appreciated/applied as the base station, a transmission point (TP), a cell (e.g., macro cell/small cell/pico cell, etc.), an antenna array or panel, RRU/RRH, etc. In addition, the base station may mean a generic term for an object that transmits and receives data to and from the terminal. For example, the base station may be a concept including one or more transmission points (TPs), one or more transmission and reception points (TRPs), and the like. Further, the TP and/or the TRP may include a panel, a transmission and reception unit, and the like of the base station.

**HST-SFN deployment**

High speed train scenarios

In the process of 3GPP Release 13, the RAN4 study item (SI) for the purpose of enhancing performance requirements in high speed scenario (HST) is approved, and the results of the SI are summarized in a predefined standard (e.g., 3GPP TR 36.878). Among various results, practical high speed scenarios are organized by operators to support cellular service, and among them, existing scenarios and scenarios with high priority in the future are classified as shown in Table 6 and Table 7 below.

Table 6 shows the existing high speed scenarios, and Table 7 shows the identified high speed scenarios.

[Table 6]

| Scenario | Description |
|---|---|
| Open space | - Outdoor eNBs are installed through the railway on same frequencies as public network coverage |
| Tunnel with leaky cable | - Leaky cables are used to extend the signal through the tunnel environment<br>- No Repeaters/CPE are installed on the carriage |

(continued)

| Scenario | Description |
|---|---|
| Tunnel for multi-antennas | - RRHs or RAUs are deployed through fiber in tunnel environment<br>- RRHs or RAUs share the different cell id<br>- Repeaters are not installed on the carriage |

[Table 7]

| Scenario | Description |
|---|---|
| SFN (Signal single frequency network) | RRHs or RAUs are deployed through fiber in tunnel environment<br>RRHs or RAUs share the same cell id<br>Repeaters are not installed on the carriage |
| Leaky cable in Tunnel (from leaky cable to repeater) | Leaky cables are used to extend the signal through the tunnel environment<br>Repeaters are installed on the carriage and distribute signal inside the carriage through leaky cables. |

Channel models for high speed scenarios

HST channel models have been devised for analysis of high speed scenarios, and three following models may be cited as examples.

Channel model for open space and tunnel for multi-antennas

A first channel model, as a channel model designed for scenarios such as open space and tunnel for multi-antennas, is a 1-tap non-fading propagation channel model and is characterized by the following Doppler shift characteristics.

[Equation 3]

$$f_s(t) = f_d \cos\theta(t)$$

In Equation 3 above, $f_s(t)$ means a Doppler shift and $f_d$ represents a maximum Doppler frequency. $\cos\theta(t)$ be classified according to the range of t as shown in Equations 4 to 6 below.

[Equation 4]

$$\cos\theta(t) = \frac{D_s/2 - vt}{\sqrt{D_{min}^2 + (D_s/2 - vt)^2}}, \quad 0 \le t \le D_s/v$$

[Equation 5]

$$\cos\theta(t) = \frac{-1.5D_s + vt}{\sqrt{D_{min}^2 + (-1.5D_s + vt)^2}}, \quad D_s/v < t \le 2D_s/v$$

[Equation 6]

$$\cos\theta(t) = \cos\theta(t \mod (2D_s/v)), \quad t > 2D_s/v$$

FIG. 11 illustrates a simplified schematic diagram of the channel model.

Channel model for leaky cable in tunnel

A second channel model, as a channel model designed for the Leaky cable in Tunnel (from leaky cable to repeater) scenario defined in Identified high speed scenarios, characterized by the characteristics shown in Table 8 below.

[Table 8]

| Tap index | Excess tap delay (ns) | Relative power (dB) | Distribution of amplitude per tap | Doppler spectrum |
|---|---|---|---|---|
| 1 | 0 | 0 | Rician, K=10dB | RICE, K=10dB, fshift=0, and Maximum Doppler frequency is 30Hz |

FIG. 11 illustrates a schematic diagram of the channel model.

Channel model for SFN

A third channel model as a channel model designed for SFN (Single Frequency Network) scenarios is a 2-tap time-varying channel model, and is characterized in that Doppler shift, tap delay, and relative power are given for each tap.

[Doppler shift]

Doppler shifts for two paths are defined as Equations 7 and 8 below, respectively.

[Equation 7]

$$f_{s,1}(t) = f_s(t + \frac{1.5D_s}{v})$$

[Equation 8]

$$f_{s,2}(t) = f_s(t + \frac{0.5D_s}{v})$$

The definitions of $f_s(t)$ in Equations 7 and 8 above are the same as the definitions in Equations 3 to 6.

[Relative power]

The relative powers for two paths are as shown in Equations 9 and 10 below, respectively.

[Equation 9]

$$p_1(t) = \begin{cases} \dfrac{(vt)^2 + D_{min}^2}{(D_s - vt)^2 + (vt)^2 + 2D_{min}^2}, & 0 < t \le D_s/v \\ \dfrac{(2D_s - vt)^2 + D_{min}^2}{(D_s - vt)^2 + (2D_s - vt)^2 + 2D_{min}^2} & D_s/v < t \le 2D_s/v \\ p_1(t \mod (2D_s/v)), & t > 2D_s/v \end{cases}$$

[Equation 10]

$$p_2(t) = p_1(t + D_s/v)$$

[Tap delay]

Tap delays for the two paths are shown in Equations 11 and 12 below, respectively.

[Equation 11]

$$d_1(t) = \begin{cases} \dfrac{\sqrt{(D_s - vt)^2 + D_{\min}^2}}{c}, & 0 < t \le 2D_s/v \\ d_1(t \mod (2D_s/v)), & t > 2D_s/v \end{cases}$$

[Equation 12]

$$d_2(t) = d_1(t + D_s/v)$$

Table 9 and FIG. 13 show examples of parameters and channel characteristics of the SFN channel model.

[Table 9]

| Parameter | Value |
|-----------|-------|
| $D_s$ | 1000 m |
| $D_{\min}$ | 10 m |
| $v$ | 350 km/h |
| $f_d$ | 875 Hz |

Evaluation methodology for Rel-17 enhancement on HST-SFN deployments

Hereinafter, agreements related to evaluation methodology for Rel-17 enhancement on HST-SFN deployment will be reviewed.

Agreement

Proposal for evaluation methodology in section 2.1 of R1-2007201 amended as follows (underlined part in Table 10 is not agreed upon)

FFS: Propagation condition for FR1, FR2, regardless of whether the CDL extension is optional or baseline.
FFS: UE heights for both FR1 and FR2.

Proposal:

LLS used for Rel-17 HST evaluations.
Mandatorily used bi-directionally, and used uni-directionally with optional gNB antenna orientation.
Rel-15 SFN is used as a baseline for comparison. Performance comparisons with other systems (e.g., Rel-16 URLLC, DPS, etc) may also be provided.

Table 10 is adopted for evaluation of HST-SFN deployments (except underlined parts).

For HST-SFN evaluation, the CDL based channel model in Table 11 is adopted.

Table 10 is a table showing LLS simulation assumption for HST-SFN deployment.

[Table 10]

| Parameter | FR1 | | FR2 |
|---|---|---|---|
| Duplexing | FDD | TDD | TDD |
| TRP layout (Ds, Dmin, etc) | Ds=700m, Dmin=150m<br>For CDL based model - TRP height: 35m, UE height: 1.5m | | Alt 2-1: Ds=700m, Dmin=150m<br>Alt 2-3: Ds=200-300m, Dmin=30-50m<br>Alt 2-4: Ds=580m, Dmin=5m<br>TRP height: [5/10/15/20/35]m, UE height: 1.5m |
| gNB antenna configuration including number of antennas, pattern, ports, orientation, etc | 2 ports: [Mg, Ng, M, N, P]=[1, 1, 1, 1, 2],<br>4 ports: [Mg, Ng, M, N, P]=[1, 1, 1, 2, 2],<br>[8 ports: Mg, Ng, M, N, P]=[1, 1, 2, 2, 2]]<br>one-to-one mapping between antenna elements and TXRUs omni-directional antenna Note: The results for other antenna configurations can be also provided | | 2 ports: [Mg, Ng, M, N, P]=[1, 1, 4, 8, 2], directional antenna<br>Note: The results for other antenna configurations can be also provided |
| UE antenna configuration including number of antennas, pattern, ports, orientation, etc | 2 ports: [Mg, Ng, M, N, P]=[ 1, 1, 1, 1, 2] or<br>4 ports: [Mg, Ng, M, N, P]=[1, 1, 1, 2, 2],<br>one-to-one mapping between antenna elements and TXRUs omni-directional antenna | | 2 ports: [Mg, Ng, M, N, P]=[1, 1, 2, 4, 2], directional antenna |
| DMRS type | Mandatory: DM-RS type 1<br>Optional: DM-RS type 2 | | |
| Number of DMRS symb. | 1+1+1 | | |
| TDD pattern | N/A | DDDDDDDSU U, S: 6D 4G 4U | DDDDDDDSUU, S: 6D 4G 4U |
| MCS | MCS 4/MCS 13/MCS 17 based on 64QAM table<br>Note: Companies can also provide results with MCS adaptation | | |
| Number of scheduled RBs | 10 or 50. Other values are optional. | | |
| Propagation condition | 4-tap channel model (TS 36.101 (Annex B.3A) / TR 36.878)<br>Optional - CDL extension (CDL D/E, DS = 100ns) | | CDL extension (CDL D/E, DS = 20ns/30ns) |
| TRS configuration, TRS periodicity | 10ms, 2-slot pattern<br>Note: results for 20ms periodicity can be also provided | | |
| PDSCH mapping | Type A, Start symbol 2, Duration 12 | | |
| Rank | Rank 1<br>Optional: other ranks or rank adaptation | | |
| BW | 10 MHz or 20 MHz | | 20MHz or 50MHz or 80MHz |
| Carrier frequency or maximum Doppler shift | 2GHz, 350kmph or 500kmph | 3.5GHz, 350kmph or 500kmph | 30 GHz 200 kmph or 350kmph |
| Performance metric | Throughput; BLER | | |

(continued)

| Parameter | FR1 | | FR2 |
|---|---|---|---|
| Other assumptions or simulation parameters, e.g., correlation | SCS: 30kHz, 15kHz as optional 2) Note: precoding method should be provided by each company | SCS: 30kHz 2) Note: precoding method should be provided by each company | SCS: 120kHz 2) Note: precoding method and analog beamforming details should be provided by each company |

Table 11 is a table showing the CDL-based channel model for HST-SFN deployment.

[Table 11]

CDL based channel model proposal for HST

Combination of the CDL channel model in TR38.901 and the 4-tap channel model in TS36.101 Annex B.3A could be considered. As illustrated in figure below, 2-tap channel model for simplicity could be assumed which is similar to RAN4's 4-tap assumption in order to reflect the characteristic of SFN-based transmission, and for each tap, CDL channel model in TR38.901 could be used to model the effect of the directional antenna of gNB.

The delay for k'th TRP is modified as

$$\tau_{k,n} = \tau_k + \tau_n$$

where $\tau_k$ is the delay of k'th TRP, which can be derived as

$$\tau_k = \frac{|y(t) - x_k|}{C}$$

where $\tau_n$ is the delay of the n'th channel cluster as in Table 7.7.1-1~7.7.1-5 in 38.901 and assume the location of the k'th TRP is $x_k$, and the UE's location is y(t). The delay spread for different TRPs could be modelled as different.

The normalized power for k'th TRP is modified as

$$P_k = 10 \, lg \left( \frac{\frac{1}{|y(t) - x_k|^2}}{\sum_{i=1,2} \frac{1}{|y(t) - x_i|^2}} \right) (dB)$$

To generate the modified angle parameters, the scaling method mentioned in subclause 7.7.5.1 in TS 38.901 is used

$$\varphi_{n,\text{scaled}} = \frac{\text{AS}_{\text{desired}}}{\text{AS}_{\text{model}}} \left( \varphi_{n,\text{model}} - \mu_{\varphi,\text{model}} \right) + \mu_{\varphi,\text{desired}}$$

where $\text{AS}_{\text{model}}$ = $\text{AS}_{\text{desired}}$ could be assumed, and $\mu_{\varphi,\text{desired}}$ of the k'th TRP is the AOD, AOA, ZOD and ZOA of LOS direction derived based on the locations and antenna heights of UE and TRPs.

$\phi_{n,\text{model}}$ $\phi_{n,0}$ is the tabulated CDL ray angle

$\text{AS}_{\text{model}}$ $\sigma_{\phi,0}$ is the rms angular spread of the tabulated CDL including the offset ray angles, calculated using the angular spread definition in Annex A in TS 38.901

$\mu_{\phi,\text{model}}$ $\mu_{\varphi,0}$ is the mean angle of the tabulated CDL, calculated using the definition in Annex A in TS 38.901

$\mu_{\phi,\text{desired}}\Delta\phi$ is the desired mean angle

$\text{AS}_{\text{desired}}\sigma_\phi$ is the desired rms angular spread

$\phi_{n,\text{scaled}}$ $\phi_n$ is the resulting scaled ray angle.

$\mu_{\phi,\text{desired}}$ of the k'th TRP is the AOD, AOA, ZOD and ZOA of LOS cluster derived by the locations and antenna heights of UE and TRPs.

If $D_1$ is used to denote the distance between UE and TRP1.

(continued)

| | |
|---|---|
| ForAOD1 of TRP1, | $\mu_{\phi,\text{desired}} = -\arctan(\dfrac{D_{\min}}{D_1}) * \dfrac{180}{\pi}$ |
| For AOA1 of TRP1, | $\mu_{\phi,\text{desired}} = 180 - \arctan(\dfrac{D_{\min}}{D_1}) * \dfrac{180}{\pi}$ |
| ForAOD2 of TRP2, | $\mu_{\phi,\text{desired}} = -180 + \arctan(\dfrac{D_{\min}}{D_s - D_1}) * \dfrac{180}{\pi}$ |
| \For AOA2 of TRP2, | $\mu_{\phi,\text{desired}} = \arctan(\dfrac{D_{\min}}{D_s - D_1}) * \dfrac{180}{\pi}$ |
| For ZOD1 of TRP1, | $\mu_{\phi,desired} = \arctan\left(\dfrac{h_{TRP} - h_{UE}}{\sqrt{D_1^2 + D_{\min}^2}}\right) + 90°$ |
| For ZOD1 of TRP2, | $\mu_{\phi,desired} = \arctan\left(\dfrac{h_{TRP} - h_{UE}}{\sqrt{(D_s - D_1)^2 + D_{\min}^2}}\right) + 90°$ |
| For ZOA2 of TRP1 , | $\mu_{\phi,desired} = -\arctan\left(\dfrac{h_{TRP} - h_{UE}}{\sqrt{D_1^2 + D_{\min}^2}}\right) + 90°$ |
| For ZOA2 of TRP2, | $\mu_{\phi,desired} = -\arctan\left(\dfrac{h_{TRP} - h_{UE}}{\sqrt{(D_s - D_1)^2 + D_{\min}^2}}\right) + 90°$ |
| The gNB antenna boresight could direct to the middle point on the railway between two TRPs. CDL-D and CDL-E channels models are recommended for evaluations. | |

(2) Agreement

For HST evaluation in FR2, Alt 2-3 is mandatory and the other alternatives (i.e., Alt 2-4 and Alt 2-1) are optional.

Alt 2-1: Ds=700m, Dmin=150m.
Alt 2-3: Ds=200-300m, Dmin=30-50m.
Alt 2-4: Ds=580m, Dmin=5m.

(3) Agreement

In the case of Alt 2-1 in Table 10 - TRP height is 35 m.
In the case of Alt 2-3 in Table 10 - TRP height is 20 m.
In the case of Alt 2-4 in Table 10 - TRP height is 5 m.

(4) Agreement

Based on predefined standards (e.g., 3GPP TR 38.802), a directional antenna model is adopted in Table 12.
Table 12 is a table for an antenna radiation pattern for terminal.

Table 12]

| Parameter | Values |
|---|---|
| Antenna element radiation pattern in $\theta''$ dim (dB) | $A_{E,V}(\theta'') = -\min\left[12\left(\dfrac{\theta'' - 90^0}{\theta_{3dB}}\right)^2, SLA_V\right], \theta_{3dB} = 90^0, SLA_V = 25$ |

(continued)

| Parameter | Values |
|---|---|
| Antenna element radiation pattern in $\varphi''$ dim (dB) | $A_{E,H}(\varphi'') = -\min\left[12\left(\dfrac{\varphi''}{\varphi_{3dB}}\right)^2, A_m\right], \varphi_{3dB} = 90^0, A_m = 25$ |
| Combining method for 3D antenna element pattern (dB) | $A''(\theta'', \varphi'') = -\min\left\{-\lfloor A_{E,V}(\theta'') + A_{E,H}(\varphi'')\rfloor, A_m\right\}$ |
| Maximum directional gain of an antenna element GE,max | 5dBi |

(5) Agreement

Antenna downtilt and azimuth directions indicate the midpoint between two TRPs.

(6) Agreement

The UE height of 1.5 m is the baseline. Results for other UE heights may be reported by each company.

(7) Agreement

Results should be reported per track location (at a specific SNR) or per Throughput vs SNR (Ds/2 (middle track point)) at a specific location.
Results for different locations may be reported for each company.

(8) Agreement

CDL extension is a baseline channel model for HST-SFN evaluation in a 4-tap channel model.

(9) Agreement

The number of TRP antenna ports for FR1 evaluation supports 8 antenna ports with an optional configuration.

(10) Agreement

Perfect synchronization as the baseline

Non-perfect time and frequency synchronization between TRPs and UE, that is, modeling of TRP CFO error (where CFO has temporal fluctuations), UE receiver CFO, TRP timing errors may be optionally considered, in evaluation, companies providing details on how it was modeled, e.g. uniform distribution between [-ppm ppm]*fc (Hz) for each simulation point, where fc is the carrier center frequency and values of a maximum frequency error in ppm are captured as predefined specifications (e.g. 3GPP TR 38.101-1/2 and TR 38.104).

(11) Agreement

It is recommended to provide results for SNR = 8, 12, 16, 20 dB.
Other SNR values are not excluded.
SRN defined relative only to the reference point closest to the TRP.

(12) Agreement

"TRP antenna configuration including number of antennas, pattern, ports, orientation, etc." in Table 10 are replaced with those in Table 13 or Table 14.

[Table 13]

| TRP antenna configuration including number of antennas, pattern, ports, orientation, etc | CDL based extension: 2 ports: [Mg, Ng, M, N, P]=[1, 1, 8, 2, 2], antenna model in Table 5, 16-to-1 mapping is used to virtualize the 16 antenna elements in the adjacent columns with fixed weight to form an antenna<br>4 ports: [Mg, Ng, M, N, P]=[1,1,8,4,2], antenna model in Table 5, virtualization, 16-to-1 mapping is used to virtualize the 16 antenna elements in the two adjacent columns with fixed weight to form an antenna<br>Optional 8 ports: [Mg, Ng, M, N, P]=[1, 1, 8, 4, 2], antenna model in Table 5, 8-to-1 mapping is used to virtualize the 8 antenna elements in a column with fixed weight to form an antenna port<br>4-tap channel model:<br>2 ports: omni-directional, MIMO matrix according to TS 38.101-4 (Annex B.1)<br>4 ports and 8 ports: antenna model and mapping are the same as for CDL based extension<br>Note: The results for other antenna configurations can be also provided | 2 ports: [Mg, Ng, M, N, P]=[1, 1, 4, 8, 2], Antenna model in Table 5<br>Note: The results for other antenna configurations can be also provided |
|---|---|---|

Table 14 is a table of the antenna radiation patterns for the TRP.

[Table 14]

| Radiation power pattern of a single antenna element for TRP | Vertical cut of the radiation power pattern (dB) | $A''_{\text{dB}}\left(\theta'', \phi''=0°\right) = -\min\left\{12\left(\dfrac{\theta''-90°}{\theta_{\text{3dB}}}\right)^2, SLA_V\right\}$ with $\theta_{\text{3dB}}=65°$, $SLA_V = 30$ dB and $\theta'' \in [0°, 180°]$ |
|---|---|---|
| | Horizontal cut of the radiation power pattern (dB) | $A''_{\text{dB}}\left(\theta''=90°, \phi''\right) = -\min\left\{12\left(\dfrac{\phi''}{\phi_{\text{3dB}}}\right)^2, A_{\max}\right\}$ with $\phi_{\text{3dB}}=65°$, $A_{\max} = 30$ dB and $\phi'' \in [-180°, 180°]$ |
| | 3D radiation power pattern (dB) | $A''_{\text{dB}}(\theta'', \phi'') = -\min\left\{-\left(A''_{\text{dB}}(\theta'', \phi''=0°) + A''_{\text{dB}}(\theta''=90°, \phi'')\right), A_{\max}\right\}$ |
| | Maximum directional gain of an antenna element GE,max | 8 dBi |

## Necessity of implicit indication of Doppler shift of DL signal

FIG. 14 illustrates an example of Doppler shift pre-compensation. FIG. 14 illustrates the reason why an implicit indication for a Doppler shift of a downlink (DL) signal is required.

Referring to FIG. 14, in HST-SFN deployment, a method for pre-compensating for the Doppler shift at the base station (or TRP1/TRP2) may be applied to enhance DL performance. For example, when the Doppler shifts of DL signals transmitted from different TRP1/2 are different from the viewpoint of the terminal, the base station pre-compensates for this to obtain the same/similar Doppler shift or correct the Doppler shift to become a value close to 0 from the viewpoint of the terminal. To perform such pre-compensation, the base station needs to know the Doppler shift value from the viewpoint of the terminal.

To this end, an implicit indication scheme using an uplink (UL) signal may be applied. For example, when the terminal transmits the UL signal, the terminal determines a UL carrier frequency based on a specific DL signal (i.e., frequency tracking), and the terminal may transmit the UL signal based on a DL signal from TRP1/2. In addition, if the base station and the terminal know which TRP is used as a reference, the terminal may estimate the Doppler shift value between the specific TRP and the terminal.

**Necessity of configuration/indication for the DL reference signal for which the terminal is to perform FT**

The terminal may continuously perform the frequency tracking (FT) based on the DL signal of the base station and transmit the UL signal based on the FT information. For example, when the transmission frequency of the DL signal is named fc and the Doppler shift is named fd from the viewpoint of the base station, the reception frequency of the DL signal may be fc+fd from the viewpoint of the terminal. And, when the terminal performs the FT based on the DL signal, the transmission frequency of the UL signal may be fc+fd from the viewpoint of the terminal.

On the other hand, in the case of the HST-SFN scenario (refer to the HST-SFN deployment described above), since the Doppler shifts of the DL signals corresponding to different TRPs are different, the transmission frequency of the UL signal depends on which TRP the FT is to be performed based on. For example, when the Doppler shifts for TRP1/2 are named fd1 and fd2, respectively, depending on from which TRP the FT is to be performed based on the DL signal, if the transmission frequency of the UL signal from the viewpoint of the terminal is based on the DL signal from TRP1, the transmission frequency is fc+fd1 and if the transmission frequency is based on the DL signal from TRP2, the transmission frequency is fc+fd2. Therefore, the transmission frequencies may be different from each other. Therefore, in order for the terminal to implicitly indicate the Doppler shift of the DL signal, the DL signal to be performed by the terminal and/or TRP information corresponding to the DL signal must be shared between the base station and the terminal.

Problems with existing SRS configurations/patterns when measuring SRS-based Doppler shift from the viewpoint of the base station

First, when the SRS transmission period is long, the accuracy of (average) Doppler shift measurement may decrease. And, for Doppler shift (and/or spread, spectrum) measurement, it is necessary to repeatedly transmit the same SRS port at regular symbol intervals within a single slot.

This is for the same/similar reason as the DL TRS (tracking reference signal). That is, for the RS density in time, at least two observations in time are required. The time-gap between two observations should not be too small. Otherwise, it may be difficult to distinguish noise due to frequency rotation. Also, the time interval between successive observations in time should not be too large. Otherwise, it results in frequency offset ambiguity or an equally small frequency pull-in range.

Based on the above reason, in order to support the same SRS port with multiple OFDM symbols within a single slot, the following methods may be considered based on the current standard, but all of the following methods have inappropriate disadvantages.

Option1: Method for configuring multiple OFDM symbols in a single SRS resource

nrofSymbols: 1,2,4 (Rel-15/16)
startPosition: (start symbol position relative to the last symbol in the slot) 0,...,5 (Rel-15), 0,...,13 (Rel-16)
Disadvantages: When multiple OFDM symbols are configured, only contiguous symbols may be configured, which may cause unnecessary RS overhead.

Option2: Method for using plurality of SRS resources

A plurality of SRS resources may be configured as a single SRS resource set, but there is no configuration/rule for transmitting different SRS resources through the same antenna port. That is, the terminal has a degree of freedom and no coercion.

The case where the plurality of SRS resources are configured is described below for each SRS usage.

beamManagement: not suitable because different resources assume different spatial domain transmission filters.
codebook: not suitable because different resources assume different spatial domain transmission filters. In addition, since only a single SRS resource set is available for the codebook, unnecessary RS overhead may be caused in the case of a terminal having multiple Tx ports.
nonCodebook: not suitable because different resources are defined to be mapped to different ports.
antennaSwitching: not suitable because different resources are defined to be mapped to different antenna ports.

Disadvantages: If it may not be assumed that different SRS resources are the same antenna port and are transmitted to different antenna ports, a frequency offset based on multiple time samples may not be estimated from the viewpoint of the base station.

Hereinafter, the present disclosure proposes a method for defining/configuring/indicating the DL signal which becomes the reference of the FT upon transmitting the UL signal (hereinafter, referred to as a first embodiment), a method for configuring the SRS resource set/SRS resource (hereinafter, referred to as a second embodiment), and a method for preventing a situation in which the SRS resource set/SRS resource may not be transmitted due to a collision (hereinafter, referred to as a third embodiment), based on the necessities and problems.

Hereinafter, the embodiments described in the present disclosure are only distinguished for convenience of description, and some methods and/or some components of one embodiment may be replaced with methods and/or components of other embodiments, or may be applied in combination with each other, of course.

In addition, a slot, a subframe, a frame, etc. mentioned in the embodiments described below in the present disclosure may correspond to specific examples of certain time units used in the wireless communication system. That is, in applying the methods proposed in the present disclosure, the time unit may be replaced with other time units applied in another wireless communication system.

In the present disclosure, it is assumed that two TRPs (e.g., TRP1/TRP2) operate for convenience of description. However, this assumption does not limit the technical scope of the present disclosure. Accordingly, the methods are of course applicable even when three or more TRPs operate.

The TRP may be described in the present disclosure for convenience of description, and it is apparent that the TRP may also be interpreted in terms such as base station/panel/beam.

In the present disclosure, L1 signaling may mean DCI-based dynamic signaling between the base station and the terminal, and L2 signaling may mean RRC/MAC CE-based higher layer signaling between the base station and the terminal.

The above-described contents (3GPP system, frame structure, NR system, etc.) may be applied in combination with the methods proposed in the present disclosure to be described later, and / or supplemented to clarify the technical characteristics of the methods proposed in the present disclosure.

In the present disclosure, '()' may be interpreted as both excluding the contents in () and including the contents in parentheses.

In the present disclosure, '/' may mean including all contents separated by / (and) or including only some of the contents distinguished by / (or).

First, the first embodiment will be described in turn.

<First Embodiment>

In the embodiment, a method for defining/configuring/indicating a DL signal that is a reference for FT when transmitting a UL signal (e.g., SRS) will be described.

The terminal may perform frequency tracking (FT) based on a specific downlink (DL) signal (and/or channel) for a specific SRS resource set/specific SRS resource. And/or, the base station may configure/instruct the terminal to perform the FT based on the specific DL signal (and/or channel) for the specific SRS resource set/specific SRS resource.

And/or, an SRS resource(s) included in the 'specific SRS resource set' and/or a UL carrier frequency for transmitting 'specific SRS resource' may be determined according to the FT based on the 'specific DL signal (and / or channel)'.

Hereinafter, in the present disclosure, an operation of performing the FT based on the specific DL signal (and/or channel) for the specific SRS resource set/SRS resource or an operation of determining the SRS resource(s) included in the 'specific SRS resource set' and the UL carrier frequency for transmitting the 'specific SRS resource' according to the FT based on the 'specific DL signal (and/or channel)' may be named as 'terminal assumption'.

And/or, for the purpose, the terminal may be configured with the specific DL signal (and/or channel) for the specific SRS resource set/specific SRS resource. That is, the base station may configure the specific DL signal (and/or channel) to the specific SRS resource set/specific SRS resource. For example, information (e.g., ID and/or index) of the specific DL signal (and/or channel) for the FT may be included/configured in the SRS-ResourceSet configuration/SRS-resource configuration included in the SRS-Config of Table 5 described above.

And/or, for SRS resource et/SRS resource, a usage corresponding to the 'terminal assumption' may be defined/configured/indicated. For example, the usage corresponding to the 'terminal assumption' may be defined/configured/indicated with freqTracking (e.g., usage = freqTracking). For example, a parameter usage of SRS-ResourceSet in Table 5 described above may represent freqTracking. For example, when the usage (e.g., freqTracking) is configured for the specific SRS resource set/specific SRS resource, the SRS resource(s) in the 'specific SRS resource set' and/or the 'specific SRS resource' may be transmitted based on the 'terminal assumption'.

And/or, when there is no DL signal (and/or channel) for the FT separately configured for the 'specific SRS resource set/specific SRS resource', and/or when pathloss reference RS (reference signal) is configured, the terminal may assume path loss Reference RS as a reference RS for the FT. And/or, when there is no DL signal (and/or channel) for the FT separately configured for the 'specific SRS resource set/specific SRS resource' and/or when the pathloss reference RS is configured, the base station may be defined/configured/indicated to assume the pathloss reference RS as the reference RS for the FT. And/or, there may be a separate configuration/indication for the assumption. For example, the pathloss reference RS may mean a reference signal configured by the parameter PathlossReferenceRS of Table 5.

And/or, if the resourceType of 'specific SRS resource set/specific SRS resource' is configured to be semi-persistent, FT Reference RS information for the FT may be included in the activation message (e.g., MAC CE/DCI) for the 'specific SRS resource set/specific SRS resource', and indicated together. For example, the base station may transmit a medium access control control element (MAC CE) or downlink control information (DCI) including the reference RS information to the terminal.

And/or, information (e.g., ID and/or index) of the specific DL signal (and/or channel) for the FT is included in the SRS-ResourceSet configuration/SRS-resource configuration included in the SRS-Config configured to RRC, and the reference RS information (e.g., ID and/or index) for the FT is included in the activation message, the reference RS information for the FT included in the activation message may be prioritized.

And/or, when the resourceType of 'specific SRS resource set/specific SRS resource' is configured to aperiodic, the information (e.g., ID and/or index) of the specific DL signal for FT (and/or channel) may be included/configured in the SRS-ResourceSet configuration/SRS-resource configuration included in SRS-Config configured through RRC, and update information for the information (e.g., ID and/or index) of the specific DL signal (and/or channel) for the FT may be received through MAC CE signaling. The update information may include the reference RS information (e.g., ID and/or index) for the FT. And/or, based on the update information, the reference RS for the FT may be updated.

And/or, the 'specific DL signal (and/or channel)' for the FT may have the following features.

### Alt1

The base station may directly configure a specific DL signal (and/or channel) in a specific SRS resource set/specific SRS resource. For example, the specific DL signal (and/or channel) ID/Index may be configured together in association with a specific SRS resource set/specific SRS resource configuration.

### Alt2

The base station may configure a DL signal (and/or channel) candidate pool for the FT, and may configure a specific value from the candidate pool in the SRS resource set. For example, the DL signal (and/or channel) candidate pool for the FT may be configured through the RRC. And/or, the candidates may be updated through MAC CE and/or DCI.

Table 15 below shows an example of a difference between the Alt1 scheme and the Alt2 scheme.

[Table 15]

| Before MAC CE update | | After MAC CE update | |
| --- | --- | --- | --- |
| FTDL#1 | TRS#1 | FTDL#1 | TRS#3 |
| FTDL#2 | TRS#2 | FTDL#2 | TRS#4 |

In the case of Alt1, a specific DL RS may be directly configured as the reference RS for the FT in the specific SRS resource set/specific SRS resource. For example, it may be configured as SRS resource set #1 - tracking reference signal (TRS) #1.

On the other hand, in the case of Alt2, one of the reference RS candidate pools for the FT may be configured in the specific SRS resource set/specific SRS resource, and an actual DL signal corresponding to the candidate value depends on whether the MAC CE is updated and/or whether the DCI is updated. For example, referring to Table 15, SRS resource set #1 - FTDL#1, FTDL#1 -TRS#1 may be configured. And/or, based on the MAC CE and/or DCI, the DL RS actually corresponding to the FTDL may be changed from TRS#1 to TRS#3. For example, the terminal may be configured with the DL signal candidate pool for the FT including a first candidate FTDL#1 and a second candidate FTDL#2 through the RRC. And/or, the UE may configure the first candidate FTDL#1 among the candidates in the SRS resource set. Thereafter, when there is no update for candidates through a separate MAC CE and / or DCI, the UE may use FTDL#1-TRS#1 as the DL signal for the FT for the corresponding SRS resource set. Or, when the UE receives the MAC CE and/or DCI updating the first candidate to TRS #3 and the second candidate to TRS #4, the terminal may use FTDL #1-TRS #3 as the DL signal for the FT for the corresponding SRS resource set. Table 15 shows that the candidate pool includes only two candidates, but the candidate pool may include two or more candidates. The Alt2 scheme may have an advantage that even when the SRS resource set configuration is made by the RRC, the DL signal (and/or channel) for the FT can be changed more quickly based on an MAC CE operation.

And/or, (in the example of Table 15, when each of FTDL#1/FTDL#2 is regarded as the candidate pool) in the above example, one RS information is included in one candidate pool, but a plurality of RS information may also be included in one candidate pool. And/or, FT reference Rs may be configured to correspond to the SRS resource ID in the specific SRS resource set in an ascending order of indexes of a plurality of RSs included in a corresponding candidate pool in a specific SRS resource set.

### <Second Embodiment>

In the embodiment, a method for configuring the SRS resource set/SRS resource will be described. That is, in the embodiment, a method for transmitting the RS through the same SRS (antenna) port with a certain symbol interval or more within a single slot (Method 2-1-1), a method for transmitting the SRS with respect to multiple slots/repeatedly transmitting an SRS pattern in a single slot (Method 2-1-2), etc., will be described.

The methods described below are only distinguished for convenience of description, and it goes without saying that a configuration of any method may be replaced with a configuration of another method, or applied in combination with each other.

### Method 2-1

A method for configuring a single SRS resource based on a single SRS resource in a single SRS resource set will be described.

**(Method 2-1-1)** First, a proposal method when a single resource is defined in a single slot is described.

One SRS resource in the SRS resource set may be configured with respect to the SRS resource set for which the terminal assumption proposed in the first embodiment may be assumed. And/or, (Alt2-1) when multiple OFDM symbols are configured for the SRS resource, the base station may define/configure/indicate that a period in which the RS is not transmitted exists within the multiple OFDM symbols. And/or (Alt2-2) a time axis interval and/or the number of repetitions for repeatedly transmitting the RS pattern configured in the SRS resource may be defined/configured/indicated.

In the above proposal, whether to apply/size (e.g., number of OFDM symbols/time gap) for 'interval in which RS is not transmitted' may be defined as a fixed value between the base station and the terminal. And/or, a specific value may be configured/indicated to the terminal based on L1/L2 signaling. And/or, in the proposal, 'time axis interval/number of repetitions' for 'repeated transmission of RS pattern' may be defined as a fixed value between the base station and the terminal. And/or, a specific value may be configured/indicated to the UE based on L1/L2 signaling.

FIG. 15 illustrates an example of the SRS transmission method of Method 2-1-1.

Referring to FIG. 15, FIG. 15(a)/(c) illustrates an example of a conventional SRS transmission method corresponding to a single SRS resource. FIG. 15(a) illustrates an example of a case where the number of OFDM symbols (e.g., nrofSymbols) configured in the SRS resource is 4, and FIG. 15(c) illustrates an example of a case where the number of OFDM symbols (e.g., nrofSymbols) configured in the SRS resource is 2. Here, I means the OFDM symbol index.

FIG. 15(b) shows an example in which the Alt2-1 scheme is applied. FIG. 15(b) is an example in which a period in which the RS is not transmitted is defined/configured/indicated with 2 OFDM symbols. And/or, although not illustrated in FIG. 15, the number of new OFDM symbols that may be configured in the SRS resource for the Alt2-1 operation may be defined. For example, the number of new OFDM symbols may be defined/configured/indicated as the number of symbols which is greater than 4.

For example, the terminal may be configured with the starting position (e.g., startPosition)/the number of OFDM symbols (e.g., nrofSymbols)/the starting symbol index of a period in which the RS is not transmitted/the number of symbols of a period in which the RS is not transmitted. That is, for the example of FIG. 15(b), the terminal may be configured/indicated with information of (5, 4, 6, 2). Alternatively, as another example, the terminal may be configured/indicated with a symbol pattern index/the number of repeated patterns/a gap between the patterns. That is, for the example of FIG. 15(b), the terminal may be configured/indicated with information of (2, 2, 3). Here, symbol pattern index = 2 may mean a symbol pattern of a single symbol of OFDM symbol index i = 5. To this end, the terminal may be configured/indicated with information on multiple predefined symbol patterns in advance.

FIG. 15(d) shows an example in which the Alt2-2 scheme is applied. FIG. 15(d) is an example in which the time axis interval and the number of repetitions are defined/configured/indicated as (4, 2). In this case, when multiple OFDM symbols are configured, the time axis interval/the number of repetitions, etc. may be determined based on the first OFDM symbol among contiguous OFDM symbols. In the example of FIG. 15(d), the second repeated RS pattern is transmitted from OFDM symbol index i = 7 separated by a time axis interval of 4 based on OFDM symbol index i = 3.

The example of FIG. 15 may be an example of a specific value among various values that may be defined/configured/indicated. The example of FIG. 15 is not assumed as the only example for applying Method 2-1-1 above.

Method 2-1-1 above takes a case where a single resource is defined within a single slot as an example. On the other hand, it is also possible to extend the proposed method so that a single resource may be defined in multiple slots. If the single resource may be defined in multiple slots, the base station has an advantage of being capable of enhancing estimation accuracy such as UL channel/UL carrier frequency/DL Doppler shift due to the increased number of samples in the time axis, and more accurately estimating even Doppler spread (and/or spectrum ). The following method may be applied to define the single SRS resource in multiple slots.

**(Method 2-1-2)** Next, a proposal method when the single resource is defined in the multiple slots will be described.

In order to define the single SRS resource in multiple slots, whether to repeatedly transmit the slot level of the SRS pattern in the single slot and/or the number of repeated transmission slots may be defined/configured/indicated.

In Method 2-1-2 above, 'whether to repeatedly transmit the slot level of the SRS pattern in the single slot/the number of repeated transmission slots' may be defined as a fixed value between the base station and the terminal. And/or, a specific value may be configured/indicated to the terminal based on the L1/L2 signaling. For example, TRS may be repeatedly defined for two slots in which the RS pattern in the single slot may be repeatedly defined with respect to two contiguous slots, which may be referred. That is, when slot level repeated transmission of the SRS pattern in the single slot is configured/indicated, the SRS pattern in the single slot may be repeatedly defined for two contiguous slots. And/or, the single resource defined in multiple slots may be mapped to the same antenna port(s) in multiple slots.

FIG. 16 shows an example of Method 2-1-2. FIG. 16(a) shows an example when applying the Alt2-1 scheme to multiple slots, and FIG. 16(b) shows an example when applying theAlt2-2 scheme to multiple slots. That is, FIG. 16 shows an example in which the SRS pattern defined in the single slot is repeatedly defined for two contiguous slots.

The example of FIG. 16 is an example of a specific value among several values that can be defined/configured/indicated. The example of FIG. 16 is not assumed as the only example for applying Method 2-1-2.

**Method 2-2**

Next, a method for configuring a single SRS resource based on multiple SRS resources in the single SRS resource set will be described.

For the SRS resource set for which the terminal assumption proposed in the first embodiment may be assumed, the antenna port(s) of all resources in the SRS resource set may be defined/configured/indicated to correspond to the same antenna port(s). For example, when SRS resource #1/#2 is configured in the SRS resource set, and antenna port 1000/1001 is configured in resource #1 and antenna port 1000/1001 is configured in resource #2, it may be assumed that antenna ports #1000 of resource #1 and resource #2 are the same antenna port, and it may be assumed that antenna ports #1001 of resource #1 and resource #2 are the same antenna port.

And/or, a specific usage may be configured in the SRS resource set for the 'terminal assumption'. For example, the specific usage may be freqTracking.

And/or, the antenna port in each resource may be limited to a single port to reduce RS overhead.

The number m of SRS resources in the 'specific SRS resource set' may be defined/configured/indicated so that m>=M is satisfied. Here, m represents the number of SRS resources in the SRS resource set (for FT), and M represents the minimum number of SRS resources in the SRS resource set (for FT). And/or, more specifically, a fixed rule may be defined to satisfy m=M in order to reduce terminal complexity and the like. For example, in the case of TRS, two resources may be defined within the single slot. Referring to this, the SRS resources may be defined in the single slot and may be defined/configured/indicated as M = 2. And/or, in the case of TRS, four resources may be defined for two contiguous slots. Referring to this, the SRS resources may be defined in two contiguous slots and defined as M = 4.

And/or, the interval n between resources in the 'specific SRS resource set' may be defined/configured/indicated so that n >= N OFDM symbols are satisfied. Here, n represents an offset between SRS resources within an SRS resource set (for FT), and N represents a minimum offset between SRS resources within an SRS resource set (for FT) (within a single slot). And/or, more specifically, a fixed rule may be defined/configured/indicated to satisfy n = N in order to reduce the complexity of the terminal. For example, in the case of TRS, 2/4 NZP CSI-RS resources may be defined in a single NZP CSI-RS resource set, and different resources within a single slot may be defined at intervals of 3 OFDM symbols. Referring to this, N = 3 may be defined. And/or, when multiple OFDM symbols are defined in each resource, n may be defined based on the position of the first symbol of each resource. When each resource defines multiple OFDM symbols, the same number of symbols/repetition factor (R) may be configured for each resource. Through this, the proposal method of the present disclosure may obtain the same power boosting effect for each resource assuming that multiple OFDM symbols are repetitively transmitted for coverage enhancement.

And/or, all SRS resources in the 'specific SRS resource set' may be defined/configured/indicated to have the same frequency axis interval. To this end, all transmissionCombs of the same size may be configured for the SRS resource. And/or, more specifically, the size of the transmissionComb may be defined/configured/indicated as a fixed rule or value in order to reduce terminal complexity. For example, in the case of TRS, the RS may be transmitted at an interval of 4 Res in 1 RB. Referring to this, the size of the transmissionComb may be defined as 4. And/or, different combOffsets may be configured for different SRS resources configured to the transmissionComb of the same size. When different combOffsets are configured for each resource, the channel estimation performance may be enhanced because the subcarrier through which the actual RS is transmitted may be changed. The size of transmissionComb and combOffset may be configured by the 'transmissionComb' parameter configured for SRS-Resource in SRS-Config of Table 5 described above. The higher layer parameter 'transmissionComb' indicates a comb value (e.g., 2/4/8) and a comb offset (e.g., 0 ... (comb value - 1)).

And/or, when the 'specific DL signal (and/or channel)' for the FT is configured in the 'specific SRS resource set', spatial Relation Info may not be configured for all resource(s) configured in the 'specific SRS resource set' or the same spatial Relation Info may be configured for all resources.

When spatial Relation Info is configured, spatial Relation Info is configured to be the same as the 'specific DL signal (and/or channel)' used for the FT in the first embodiment, or the 'specific DL signal (and/or channel)' may be configured as another DL signal (and/or channel) configured as a QCL reference RS (e.g., referenceSignal in Table 5). For example, the terminal may assume and/or may be configured/indicated with the QCL reference RS to be a 'specific DL signal (and/or channel)' (for a specific SRS resource set). And/or, the 'specific DL signal (and/or channel)' configured for the FT in the SRS resource set may be assumed as spatial Relation Info for all resources in the resource set. And/or, there may be a separate definition/configuration/indication for the assumption. Through this, it is possible to ensure that the RS and/or (antenna) ports of all resources have the same channel characteristics by allowing the same spatial domain transmission filter to be configured for all SRS resources configured in the SRS resource set.

And/or, when there is no DL signal (and/or channel) for the FT separately configured for the 'specific SRS resource set', and/or when there is no pathloss reference RS configuration, spatial Relation Info configured identically for all resources may be defined/configured/indicated to be assumed as the reference RS for the FT. And/or, spatial Relation Info of a specific SRS resource (e.g., the first resource) in the SRS resource set for the purpose (i.e., usage = freqTracking) may be defined/configured/indicated to be assumed as the reference RS for the FT. And/or, there may be a separate definition/configuration/indication for the assumption. For example, the above assumption may be applied when the usage is configured for the above purpose (i.e., freqTracking).

Method 2-1/Method 2-2 above may be applied as an independent method, and/or applied in a joint form by applying both methods together. To this end, there may be a separate definition/configuration/indication for the terminal in order to distinguish/configure/indicate the applied operation (e.g., single application or joint application, etc.). For example, by applying the two methods together, an SRS resource set constituted by SRS resources corresponding to different slots can be defined/configured/indicated. To this end, an SRS pattern within a single slot may be configured based on Method 2-1 for each of the different SRS resources configured in a single SRS resource set (e.g., SRS resource #1/SRS resource #2).

And/or, in the case of the P/SP SRS resource, periodicity and intra-period slot offset information (e.g., periodicityAndOffset-p/periodicityAndOffset-sp in Table 5) may be configured, and based on the configuration value, respective SRS resources may be configured to correspond to different slots. Referring to the example of FIG. 16, the SRS resources corresponding to the first slot and the second slot are different (e.g., in the case of the 1st slot, SRS resource #1/in the case of the 2nd slot, resource #2), and different slot offset values may be configured in the two SRS resources, and the two SRS resources may be configured in a single SRS resource set.

### Third Embodiment

In the embodiment, a method for preventing a situation in which an SRS resource set and/or an SRS resource for transmission based on the terminal assumption of the first embodiment cannot be transmitted due to collision will be described. In the present disclosure, collision may also be expressed as overlapping.

The methods described below are only distinguished for convenience of description, and it goes without saying that a configuration of any method may be replaced with a configuration of another method, or applied in combination with each other.

### Method 3-1

The base station may configure/indicate the terminal to preferentially transmit a resource set for the purpose of usage = freqTracking for different SRS resource sets. And/or, the UE may preferentially transmit a resource set for the purpose of usage = freqTracking for different SRS resource sets.

More specifically, Method 3-1 may be applied to an SRS resource set in which the same resourceType is configured. For example, resourceType may be a time behavior. As an example, Method 3-1 may be applied to an SRS resource set in which the time behavior is configured to be periodic. Alternatively, Method 3-1 may be applied to an SRS resource set in which the time behavior is configured to be semi-persistent. Alternatively, Method 3-1 may be applied to the SRS resource set in which the time behavior is configured to be aperiodic.

Method 3-1 above enables transmission of an SRS for the purpose of DL Doppler shift pre-compensation instead of the SRS for the purpose of UL channel estimation, so that out-dating may occur in UL scheduling, but it has the advantage of enhancing DL performance. Method 3-1 above may be preferred assuming a general situation in which DL traffic is greater than UL traffic.

## Method 3-2

The base station may configure/indicate the terminal not to transmit a resource set for the purpose of usage = freqTracking for different SRS resource sets in a period in which SRS resources in the different SRS resource sets overlap. And/or, the terminal does not transmit a resource set for the purpose of usage = freqTracking for different SRS resource sets for a period in which SRS resources in the different SRS resource sets overlap. For example, the terminal may not transmit the resource set for the purpose of usage = freqTracking, and/or usage = A resource set for the purpose of beamManagement, and/or transmit the resource set for the purpose of usage = beamMnagement, in a period in which the SRS resource in the resource set for the purpose of usage = freqTracking and the SRS resource in the resource set for the purpose of usage = beamManagement overlap. Here, the above method may be applied by replacing the resource set for the purpose of usage = beamManagement with a resource set for the purpose of usage = codebook, a resource set for the purpose of usage = nonCodebook, or a resource set for the purpose of antennaSwitching.

And/or, the terminal may apply the assumption of the resource set for the purpose of usage = freqTracking to the UL carrier frequency configuration for the SRS resource set of different usage for performing transmission. And/or, the base station may configure/indicate the terminal to apply the assumption of the resource set for the purpose of usage = freqTracking to the UL carrier frequency configuration for the SRS resource set of different usage for performing transmission.

More specifically, Method 3-2 above may be applied to an SRS resource set in which the same resourceType is configured. For example, resourceType may be the time behavior. As an example, Method 3-2 may be applied to an SRS resource set in which the time behavior is configured to be periodic. Alternatively, Method 3-1 may be applied to an SRS resource set in which the time behavior is configured to be semi-persistent. Alternatively, Method 3-2 may be applied to the SRS resource set in which the time behavior is configured to be aperiodic.

Method 3-2 above has the advantage of being able to implicitly indicate the DL Doppler shift while transmitting the SRS for the purpose of UL channel estimation. However, there may be a disadvantage that the resource configuration in the SRS resource set is not suitable for implicit indication of the DL Doppler shift.

## Method 3-3

The base station may configure/indicate the terminal not to transmit the PUCCH for a period in which the PUCCH carrying only the CSI report(s) or the L1-RSRP report(s) and the SRS resource set for the purpose of usage = freqTracking overlap. And/or, the terminal may not transmit the PUCCH for the period in which the PUCCH carrying only the CSI report (s) or the L1-RSRP report (s) and the SRS resource set for the purpose of usage = freqTracking overlap. Here, the PUCCH and/or the SRS resource set for the purpose of usage = freqTracking may be configured to be periodic (P) and/or semi-persistent (SP).

And/or, in addition to Method 3-3, semi-persistent (SP) transmission may be defined/configured/indicated to take precedence over periodic (P) transmission. For example, a priority may be defined as (high) SP SRS > SP PUCCH > P SRS > (low) P PUCCH. Alternatively, SRS transmission may be defined to always take precedence over PUCCH transmission. For example, the priority may be defined as (high) SP SRS > P SRS > (low) P/SP PUCCH.

Method 3-3 above enables transmission of an SRS for the purpose of DL Doppler shift pre-compensation instead of the SRS for the purpose of DL channel estimation, so that out-dating may occur in DL scheduling, but it has the advantage of enhancing the DL performance through pre-compensation for Doppler shift.

## Method 3-4

The base station may configure/indicate the terminal to perform transmission by shifting/delaying RS transmission in the period overlapped for the SRS resource in the SRS resource set for the purpose of usage - freqTracking when a period in which the SRS resource in the SRS resource set for the purpose of usage = freqTracking overlaps with SRS resource transmission and/or PUCCH transmission in another SRS resource set occurs. And/or, the base terminal may perform transmission by shifting/delaying RS transmission in the period overlapped for the SRS resource in the SRS resource set for the purpose of usage - freqTracking when the period in which the SRS resource in the SRS resource set for the purpose of usage = freqTracking overlaps with SRS resource transmission and/or PUCCH transmission in another SRS resource set occurs.

In Method 3-4 above, the size (e.g., number of OFDM symbols)/direction/range (e.g., maximum number of OFDM symbols capable of shifting/delaying) of 'shift/delay' may be defined/configured/indicated as a fixed value between the base station and the terminal. For example, the direction of 'shift/delay' may mean whether to move to a previous symbol or a subsequent symbol based on a preconfigured position. And/or, a specific value may be configured/indicated to the terminal based on the L1/L2 signaling. FIG. 17 illustrates an example of Method 3-4.

FIG. 17 illustrates an example of a method for shifting/delaying to a symbol immediately following an overlapped symbol. FIG. 17(a) illustrates an example of an SRS transmission position before shift/delay, and FIG. 17(b) illustrates an example of shifting/delaying SRS transmission when SRS transmission overlaps with PUCCH transmission (e.g., OFDM symbol index I = 7). Meanwhile, FIG. 17 illustrates an example of applying shift/delay only to a specific overlapped symbol, and to this end, in Method 3-4 above, the shift/delay may be defined/configured/indicated to be applied only to a specific resource among SRS resources set in a single SRS resource set and/or a specific transmission position (e.g., 1st/2nd/... or last SRS transmission symbol) within the resource.

And/or, when overlapping occurs in a specific symbol, the terminal may apply the same shift/delay to transmission symbols of all resources in the SRS resource set. And/or, when overlapping occurs in a specific symbol, the base station may be defined/configured/indicated to apply the same shift/delay to transmission symbols of all resources in the SRS resource set. FIG. 18 illustrates such an example.

FIG. 18 illustrates an example in which an SRS transmission defined at I = 3 where no actual overlap occurs is shifted/delayed together based on shift/delay due to overlap at I = 7. Since the scheme may maintain the interval between SRS transmission symbols regardless of the shift/delay, the scheme may have an advantage of not increasing the complexity for estimating UL channel/UL carrier frequency/DL Doppler shift from the viewpoint of the base station.

And/or, in Method 3-4 above, a range in which the 'shift/delay' is possible (e.g., the maximum number of OFDM symbols) may be separately defined/configured/indicated. In this case, if the range is not exceeded, the SRS transmission symbol may be changed and transmitted according to the shift/delay rule, and if the range is exceeded, SRS transmission may not be performed (e.g., drop).

Hereinafter, in terminal/base station operations to be described with reference to FIGS. 19 to 20, the base station may be a general term for an object that transmits and receives data to and from the terminal. For example, the base station may be a concept including one or more transmission points (TPs), one or more transmission and reception points (TRPs), and the like. Further, the TP and/or the TRP may include a panel, a transmission and reception unit, and the like of the base station. In addition, "TRP" may be replaced and applied as an expression such as a panel, an antenna array, a cell (e.g., macro cell/small cell/pico cell, etc.), a TP (transmission point), a base station (base station, gNB, etc.), etc.

As described above, the TRPs may be distinguished according to information (e.g., index, ID) on the CORESET group (or CORESET pool). As an example, when one terminal is configured to transmit/receive with multiple TRPs (or cells), this may mean that multiple CORESET groups (or CORESET pools) are configured for one terminal. The configuration of such a CORESET group (or CORESET pool) may be performed through higher layer signaling (e.g., RRC signaling, etc.).

FIG. 19 is a flowchart for describing an operation method of a terminal proposed in the present disclosure.

Referring to FIG. 19, first, the terminal (100/200 of FIGS. 21 to 25) may receive SRS-related configuration information from the base station in step S1901.

For example, the SRS-related configuration information may be the parameter SRS-ResourceSet of the SRS-Config IE or SRS-Config IE of Table 5. For example, the SRS-related configuration information may include at least one of information (e.g., srs-ResourceIdList in Table 5) related to an SRS resource set, information (e.g., usage in Table 5) related to a usage of the SRS resource set, and/or information (e.g., ID/index) related to a downlink signal (or downlink channel) for the usage. The information related to the usage of the SRS resource set may represent the usage of frequency tracking (usage = freqTracking).

For example, the information related to the usage of the SRS resource set and/or the information related to the downlink signal for the usage may be configured for each SRS resource set.

For example, the base station may include one or more base stations or one or more TRPs. As an example, the base station may include at least one of the first base station 11a and/or the second base station 11b of FIG. 11. As another example, the base station may include at least one of TRP1 and/or TRP2 of FIG. 10 or FIG. 14. For example, when the base station includes multiple base stations or multiple TRPs, the SRS-related configuration information may be received from one base station among the multiple base stations or one TRP among the multiple TRPs. In addition, the first embodiment may be referred to for a more specific operation of configuring a DL signal serving as a reference for FT and/or an operation capable of replacing/combining the operation.

For example, the operation of the terminal which receives the SRS-related configuration information in step S1901 may be implemented by the devices of FIGS. 21 to 25. For example, referring to FIG. 22 , one or more processors 202 may control one or more memories 106/206 and/or one or more transceivers 104/204 to receive the SRS-related configuration information.

And/or, the terminal (100/200 of FIGS. 21 to 25) may receive a downlink signal from the base station based on the SRS-related configuration information in step S1902.

For example, the downlink signal may be received from one or more base stations or one or more TRPs. As an example, the terminal may receive the downlink signal from each of the first base station 11a and the second base station 11b of FIG. 11. As another example, the terminal may receive the downlink signal from each of TRP1 and TRP2 of FIG. 10 or FIG. 14.

For example, the operation of the terminal which receives the downlink signal in step S1902 may be implemented by the devices of FIGS. 21 to 25. For example, referring to FIG. 22 , one or more processors 102/202 may control one or more memories 104/204 and/or one or more transceivers 106/206 to receive the downlink signal.

And/or, the terminal (100/200 of FIGS. 21 to 25) may perform frequency tracking based on the downlink signal in step S1903.

For example, the terminal may receive downlink signals from TRP1 and TRP2 of FIG. 10 or FIG. 14, and perform the frequency tracking based on the downlink signal received from TRP1 based on information related to the downlink signal for the usage representing the downlink signal of TRP1. Here, the frequency tracking may mean an operation of determining a UL carrier frequency or measuring a Doppler shift based on the downlink signal.

And/or, based on the SRS-related configuration information not including the information related to the downlink signal for the usage, the frequency tracking may be performed based on a pathloss reference reference signal (RS). For example, when the terminal does not receive the information related to the downlink signal for the usage, the terminal may perform the frequency tracking based on the signal configured as the parameter pathlossReferenceRS of SRS-Config IE of Table 5.

For example, the operation of the terminal which performs the frequency tracking in step S1903 may be implemented by the devices of FIGS. 21 to 25. For example, referring to FIG. 22 , one or more processors 102/202 may control one or more memories 104/204 and/or one or more transceivers 106/206 to perform the frequency tracking.

And/or, the terminal (100/200 of FIGS. 21 to 25) may transmit an SRS corresponding to at least one SRS resource included in the SRS resource set to the base station based on the frequency tracking in step S1904. For example, the terminal may receive the downlink signals from TRP1 and TRP2 of FIG. 10 or FIG. 14, and perform the frequency tracking based on the downlink signal received from TRP1 based on the information related to the downlink signal for the usage representing the downlink signal of TRP1, and then transmit the SRS to TRP1 and/or TRP by reflecting a result of the performed frequency tracking.

For example, the operation of the terminal which transmits the SRS in step S1904 may be implemented by the devices of FIGS. 21 to 25. For example, referring to FIG. 22 , one or more processors 102/202 may control one or more memories 104/204 and/or one or more transceivers 106/206 to transmit the SRS.

As an example, the SRS resource set may include one SRS resource.

And/or, one SRS resource may include multiple orthogonal frequency-division multiplexing (OFDM) symbols in one slot, and multiple OFDM symbols may include at least two non-contiguous OFDM symbols. For example, multiple OFDM symbols may be configured based on Method 2-1-1. For example, multiple OFDM symbols may be configured based on the Alt2-1 scheme as illustrated in FIG. 15(b). Alternatively, multiple OFDM symbols may be configured based on the Alt2-2 scheme as illustrated in FIG. 15(d). In addition, Method 2-1-1 may be referred to for a more specific operation for a case where one SRS resource is configured in one SRS resource set and one SRS resource is configured in one slot, and/or an operation capable of replacing/combining the operation.

And/or, one SRS resource may be configured in multiple slots, and one SRS resource may be configured based on a slot-wise reference signal pattern (or an SRS pattern within a single slot). For example, one SRS resource may be configured according to Method 2-1-2. For example, one SRS resource may be configured based on the Alt2-1 scheme as illustrated in FIG. 16(a). Alternatively, one SRS resource may be configured based on the Alt2-1 scheme as illustrated in FIG. 16(b). In addition, Method 2-1-2 may be referred to for a more specific operation for a case where one SRS resource is configured in one SRS resource set and one SRS resource is configured in multiple slots, and/or an operation capable of replacing/combining the operation.

As another example, the SRS resource set may include multiple SRS resources. And/or, multiple SRS resources may be configured to the same antenna port. And/or, multiple SRS resources may be configured in the same orthogonal frequency-division multiplexing (OFDM) symbol pattern. And/or, multiple SRS resources may be configured to the same transmissionComb value (e.g., transmissionComb in Table 5), and multiple SRS resources may be set to different combOffset values (e.g., combOffset in Table 5). And/or, multiple SRS resources may be configured to the same spatial Relation Info value (e.g., spatial Relation Info), and the frequency tracking may be performed based on a quasi-co-location (QCL) reference reference signal (RS) (e.g., referenceSignal of spatial Relation Info). That is, the frequency tracking may be performed based on the value of spatialRelationInfo.

And/or, the downlink signal may be used as the quasi-co-location (QCL) reference reference signal (RS) for at least one SRS resource included in the SRS resource set.

In addition, Method 2-2 may be referred to for a more specific operation for a case where one SRS resource includes multiple SRS resources, and/or an operation capable of replacing/combining the operation.

And/or, based on at least one SRS resource included in the SRS resource set being overlapped with transmission of an SRS resource for another usage and/or a physical uplink control channel (PUCCH), at least one SRS resource or an overlapping period of at least one SRS resource may be shifted or delayed in the time region (see Method 3-4 for the specific operation).

And/or, in order to prevent a situation in which the SRS resource set and/or the SRS resource for the frequency tracking may not be transmitted due to a collision, Method 3-1/Method 3-2/Method 3-3 may be replaced or applied as Method 3-4, or applied in combination with Method 3-4.

Since the operation of the terminal described with reference to FIG. 19 is the same as the operation of the terminal described with reference to FIGS. 1 to 18 (e.g., the first to third embodiments), other detailed descriptions are omitted.

The above-described signaling and operation may be implemented by the devices (e.g., FIGS. 21 to 25) to be described below. For example, the signaling and operation may be processed by one or more processors of FIGS. 21 to 25, and the signaling and operation may be stored in the memory in the form of an instruction/program (e.g., instruction or executable code) for driving at least one processor of FIGS. 21 to 25.

For example, a processing apparatus configured to control a terminal to transmit a sounding reference signal (SRS) in a wireless communication system may include: at least one processor; and at least one memory operatively connected to the at least one processor and storing instructions for performing operations based on being executed by the at least one processor, and the operations may include receiving, from a base station, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking; receiving, from the base station, the downlink signal based on the SRS-related configuration information; performing the frequency tracking based on the downlink signal; and transmitting, to the base station, an SRS corresponding to at least one SRS resource included in the SRS resource set, based on the frequency tracking.

As another example, in a computer-readable storage medium storing at least one instruction which, when executed by at least one processor, causes the at least one processor to control operations, the operations may include receiving, from a base station, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking; receiving, from the base station, the downlink signal based on the SRS-related configuration information; performing the frequency tracking based on the downlink signal; and transmitting, to the base station, an SRS corresponding to at least one SRS resource included in the SRS resource set, based on the frequency tracking.

FIG. 20 is a flowchart for describing an operation method of a base station proposed in the present disclosure.

Referring to FIG. 20, first, the base station (100/200 of FIGS. 21 to 25) may transmit the SRS-related configuration information to the terminal in step S2001.

For example, the SRS-related setting information may be the parameter SRS-ResourceSet of the SRS-Config IE or SRS-Config IE of Table 5. For example, the SRS-related configuration information may include at least one of information (e.g., srs-ResourceIdList in Table 5) related to an SRS resource set, information (e.g., usage in Table 5) related to a usage of the SRS resource set, and/or information (e.g., ID/index) related to a downlink signal (or downlink channel) for the usage. The information related to the usage of the SRS resource set may represent the usage of frequency tracking (usage = freqTracking).

For example, the information related to the usage of the SRS resource set and/or the information related to the downlink signal for the usage may be configured for each SRS resource set.

For example, the base station may include one or more base stations or one or more TRPs. As an example, the base station may include at least one of the first base station 11a and/or the second base station 11b of FIG. 11. As another example, the base station may include at least one of TRP1 and/or TRP2 of FIG. 10 or FIG. 14. For example, when the base station includes multiple base stations or multiple TRPs, the SRS-related configuration information may be received from one base station among the multiple base stations or one TRP among the multiple TRPs. In addition, the first embodiment may be referred to for a more specific operation of configuring a DL signal serving as a reference for FT and/or an operation capable of replacing/combining the operation.

For example, the operation of the base station which transmits the SRS-related configuration information in step S2001 may be implemented by the devices of FIGS. 21 to 25. For example, referring to FIG. 22 , one or more processors 202 may control one or more memories 104/204 and/or one or more transceivers 106/206 to transmit the SRS-related configuration information.

And/or, the base station (100/200 of FIGS. 21 to 25) may transmit the downlink signal to the terminal based on the SRS-related configuration information in step S2002.

For example, the downlink signal may be received from one or more base stations or one or more TRPs. As an example, the terminal may receive the downlink signal from each of the first base station 11a and the second base station 11b of FIG. 11. As another example, the terminal may receive the downlink signal from each of TRP1 and TRP2 of FIG. 10 or FIG. 14.

The frequency tracking may be performed based on the downlink signal. For example, the terminal may receive downlink signals from TRP1 and TRP2 of FIG. 10 or FIG. 14, and perform the frequency tracking based on the downlink signal received from TRP1 based on information related to the downlink signal for the usage representing the downlink signal of TRP1. Here, the frequency tracking may mean an operation of determining a UL carrier frequency or measuring a Doppler shift based on the downlink signal.

And/or, based on the SRS-related configuration information not including the information related to the downlink signal for the usage, the frequency tracking may be performed based on a pathloss reference reference signal (RS). For example, when the terminal does not receive the information related to the downlink signal for the usage, the terminal may perform the frequency tracking based on the signal configured as the parameter pathlossReferenceRS of SRS-Config IE of Table 5.

For example, the operation of the base station which transmits the downlink signal in step S2002 may be implemented by the devices of FIGS. 21 to 25. For example, referring to FIG. 22, one or more processors 102 may control one or more memories 104/204 and/or one or more transceivers 106/206 to transmit the downlink signal to the terminal 202.

And/or, the base station (100/200 of FIGS. 21 to 25) may receive an SRS corresponding to at least one SRS resource included in the SRS resource set from the terminal based on the frequency tracking in step S2003. For example, the terminal may receive the downlink signals from TRP1 and TRP2 of FIG. 10 or FIG. 14, and perform the frequency tracking based on the downlink signal received from TRP1 based on the information related to the downlink signal for the usage representing the downlink signal of TRP1, and then transmit the SRS to TRP1 and/or TRP by reflecting a result of the performed frequency tracking.

For example, the operation of the base station which receives the SRS in step S2003 may be implemented by the devices of FIGS. 21 to 25. For example, referring to FIG. 22 , one or more processors 102/202 may control one or more memories 104/204 and/or one or more transceivers 106/206 to receive the SRS.

As an example, the SRS resource set may include one SRS resource.

And/or, one SRS resource may include multiple orthogonal frequency-division multiplexing (OFDM) symbols in one slot, and multiple OFDM symbols may include at least two non-contiguous OFDM symbols. For example, multiple OFDM symbols may be configured based on Method 2-1-1. For example, multiple OFDM symbols may be configured based on the Alt2-1 scheme as illustrated in FIG. 15(b). Alternatively, multiple OFDM symbols may be configured based on the Alt2-2 scheme as illustrated in FIG. 15(d). In addition, Method 2-1-1 may be referred to for a more specific operation for a case where one SRS resource is configured in one SRS resource set and one SRS resource is configured in one slot, and/or an operation capable of replacing/combining the operation.

And/or, one SRS resource may be configured in multiple slots, and one SRS resource may be configured based on a slot-wise reference signal pattern (or an SRS pattern within a single slot). For example, one SRS resource may be configured according to Method 2-1-2. For example, one SRS resource may be configured based on the Alt2-1 scheme as illustrated in FIG. 16(a). Alternatively, one SRS resource may be configured based on the Alt2-1 scheme as illustrated in FIG. 16(b). In addition, Method 2-1-2 may be referred to for a more specific operation for a case where one SRS resource is configured in one SRS resource set and one SRS resource is configured in multiple slots, and/or an operation capable of replacing/combining the operation.

As another example, the SRS resource set may include multiple SRS resources. And/or, multiple SRS resources may be configured to the same antenna port. And/or, multiple SRS resources may be configured in the same orthogonal frequency-division multiplexing (OFDM) symbol pattern. And/or, multiple SRS resources may be configured to the same transmissionComb value (e.g., transmissionComb in Table 5), and multiple SRS resources may be set to different combOffset values (e.g., combOffset in Table 5). And/or, multiple SRS resources may be configured to the same spatial Relation Info value (e.g., spatial Relation Info), and the frequency tracking may be performed based on a quasi-co-location (QCL) reference reference signal (RS) (e.g., referenceSignal of spatial Relation Info). That is, the frequency tracking may be performed based on the value of spatialRelationInfo.

And/or, the downlink signal may be used as the quasi-co-location (QCL) reference reference signal (RS) for at least one SRS resource included in the SRS resource set.

In addition, Method 2-2 may be referred to for a more specific operation for a case where one SRS resource includes multiple SRS resources, and/or an operation capable of replacing/combining the operation.

And/or, based on at least one SRS resource included in the SRS resource set being overlapped with transmission of an SRS resource for another usage and/or a physical uplink control channel (PUCCH), at least one SRS resource or an overlapping period of at least one SRS resource may be shifted or delayed in the time region (see Method 3-4 for the specific operation).

And/or, in order to prevent a situation in which the SRS resource set and/or the SRS resource for the frequency tracking may not be transmitted due to a collision, Method 3-1/Method 3-2/Method 3-3 may be replaced or applied as Method 3-4, or applied in combination with Method 3-4.

Since the operation of the base station described with reference to FIG. 20 is the same as the operation of the terminal described with reference to FIGS. 1 to 19 (e.g., the first to third embodiments), other detailed descriptions are omitted.

The signaling and operation may be implemented by the devices (e.g., FIGS. 21 to 25) to be described below. For example, the signaling and operation may be processed by one or more processors of FIGS. 21 to 25, and the signaling and operation may be stored in the memory in the form of an instruction/program (e.g., instruction or executable code) for driving at least one processor of FIGS. 21 to 25.

For example, a processing apparatus configured to control a base station to receive a sounding reference signal (SRS) in a wireless communication system may include: at least one processor; and at least one memory operatively connected to the at least one processor and storing instructions for performing operations based on being executed by the at least one processor, and the operations may include transmitting, to a terminal, SRS-related configuration information, wherein the SRS-related configuration information includes at least one of information related to an SRS resource set, information related to a usage of the SRS resource set, and/or information related to a downlink signal for the usage, and the information related to the usage for the SRS resource set indicates a usage for frequency tracking; transmitting, to the terminal, the downlink signal based on the SRS-related configuration information; performing the frequency tracking based on the downlink signal; and receiving, from the terminal, an SRS corresponding to at least one SRS resource included in the SRS resource set, based on the frequency tracking.

As another example, in a computer-readable storage medium storing at least one instruction which, when executed by at least one processor, causes the at least one processor to control operations, the operations may include transmitting, to a terminal, SRS-related configuration information, wherein the SRS-related configuration information includes at least one of information related to an SRS resource set, information related to a usage of the SRS resource set, and/or information related to a downlink signal for the usage, and the information related to the usage for the SRS resource set indicates a use for frequency tracking; transmitting, to the terminal, the downlink signal based on the SRS-related configuration information; performing the frequency tracking based on the downlink signal; and receiving, from the terminal, an SRS corresponding to at least one SRS resource included in the SRS resource set, based on the frequency tracking.

## Communication system applied to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 21 illustrates a communication system applied to the present disclosure.

Referring to FIG. 21, a communication system applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. Relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Devices applicable to the present disclosure

FIG. 22 illustrates wireless devices applicable to the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 1010x and the BS 200} and/or {the wireless device 1010x and the wireless device 1010x} of FIG. 22.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include at least one processor 202 and at least one memory 204 and additionally further include at least one transceiver 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. From RF band signals into baseband signals in order to process received user data, control information, radio signals/channels, etc. Using the one or more processors 102 and 202. The one or more transceivers 106 and 206 may convert the user data, control information, radio signals/channels, etc. Processed using the one or more processors 102 and 202 from the base band signals into the RF band signals. To this end, the one or more transceivers 106 and 206 may include (analog) oscillators and/or filters.

**Example of a wireless device applied to the present disclosure**

FIG. 23 illustrates another example of a wireless device applied to the present disclosure. The wireless device may be implemented in various forms according to a use-case/service.

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 104 of FIG. 16. For example, the transceiver(s) 114 may include the one or more transceivers 106 and 106 and/or the one or more antennas 108 and 108 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110).

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 15), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 100, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 100 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Portable Device Example to Which Disclosure is Applied**

FIG. 24 illustrates a portable device applied to the present disclosure. The portable device may include a smart phone, a smart pad, a wearable device (e.g., a smart watch, a smart glass), and a portable computer (e.g., a notebook, etc.). The portable device may be referred to as a Mobile Station (MS), a user terminal (UT), a Mobile Subscriber Station (MSS), a Subscriber Station (SS), an Advanced Mobile Station (AMS), or a Wireless terminal (WT).

Referring to FIG. 24, a portable device 1010 may include an antenna unit 108, a communication unit 110, a control unit 120, a memory unit 130, a power supply unit 140a, an interface unit 140b, and an input/output unit 140c. The antenna unit 108 may be configured as a part of the communication unit 110. The blocks 110 to 130/140a to 140c correspond to the blocks 110 to 130/140 of FIG. 23, respectively.

The communication unit 110 may transmit/receive a signal (e.g., data, a control signal, etc.) to/from another wireless device and eNBs. The control unit 120 may perform various operations by controlling components of the portable device 1010. The control unit 120 may include an Application Processor (AP). The memory unit 130 may store data/parameters/programs/codes/instructions required for driving the portable device 1010. Further, the memory unit 130 may store input/output data/information, etc. The power supply unit 140a may supply power to the portable device 1010 and include a wired/wireless charging circuit, a battery, and the like. The interface unit 140b may support a connection between the portable device 1010 and another external device. The interface unit 140b may include various ports (e.g., an audio input/output port, a video input/output port) for the connection with the external device. The input/output unit 140c may receive or output a video information/signal, an audio information/signal, data, and/or information input from a user. The input/output unit 140c may include a camera, a microphone, a user input unit, a display unit 140d, a speaker, and/or a haptic module.

As one example, in the case of data communication, the input/output unit 140c may acquire information/signal (e.g., touch, text, voice, image, and video) input from the user and the acquired information/signal may be stored in the memory unit 130. The communication unit 110 may transform the information/signal stored in the memory into the radio signal and directly transmit the radio signal to another wireless device or transmit the radio signal to the eNB. Further, the communication unit 110 may receive the radio signal from another wireless device or eNB and then reconstruct the received radio signal into original information/signal. The reconstructed information/signal may be stored in the memory unit 130 and then output in various forms (e.g., text, voice, image, video, haptic) through the input/output unit 140c.

FIG. 25 exemplifies a vehicle or an autonomous driving vehicle to which the present disclosure is applied. The vehicle or autonomous driving vehicle may be implemented as a mobile robot, vehicle, train, manned/unmanned aerial vehicle (AV), ship, or the like.

Referring to FIG. 25, the vehicle or autonomous driving vehicle 100 may include an antenna unit 108, a communication unit 110, a control unit 120, a driving unit 140a, a power supply unit 140b, and a sensor unit 140c, and an autonomous driving unit 140d. The antenna unit 108 may be configured as a part of the communication unit 110. Blocks 110/130/140a-140d correspond to blocks 110/130/140 of FIG. 24, respectively.

The communication unit 110 may transmit and receive signals (e.g. data, control signals, etc.) with external devices such as other vehicles, base stations (e.g. base stations, road side units, etc.), servers, and the like. The control unit 120 may control elements of the vehicle or the autonomous driving vehicle 100 to perform various operations. The control unit 120 may include an Electronic Control Unit (ECU). The driving unit 140a may cause the vehicle or the autonomous driving vehicle 100 to run on the ground. The driving unit 140a may include an engine, a motor, a power train, a wheel, a brake, a steering device, and the like. The power supply unit 140b may supply power to the vehicle or the autonomous driving vehicle 100, and may include a wired/wireless charging circuit, a battery, and the like. The sensor unit 140c may obtain a vehicle state, surrounding environment information, user information, and the like. The sensor unit 140c may include an inertial measurement unit (IMU) sensor, a collision sensor, a wheel sensor, a speed sensor, an inclination sensor, a weight sensor, a heading sensor, a position module, and a vehicle forward/reverse sensor, a battery sensor, a fuel sensor, a tire sensor, a steering sensor, a temperature sensor, a humidity sensor, an ultrasonic sensor, an illuminance sensor, a pedal position sensor, and the like. The autonomous driving unit 140d may implement a technology for maintaining a driving lane, a technology for automatically adjusting speed such as adaptive cruise control, a technology for automatically driving along a predetermined route, and a technology for automatically setting a route and driving when a destination is set.

As an example, the communication unit 110 may receive map data, traffic information data, and the like from an external server. The autonomous driving unit 140d may generate an autonomous driving route and a driving plan based on the acquired data. The control unit 120 may control the driving unit 140a so that the vehicle or the autonomous driving vehicle 100 moves along the autonomous driving route according to the driving plan (e.g. speed/direction control). During the autonomous driving, the communication unit 110 may non/periodically acquire the latest traffic information data from the external server, and may acquire surrounding traffic information data from surrounding vehicles. Also, during the autonomous driving, the sensor unit 140c may acquire a vehicle state and surrounding environment information. The autonomous driving unit 140d may update the autonomous driving route and driving plan based on the newly acquired data/information. The communication unit 110 may transmit information about a vehicle location, an autonomous driving route, a driving plan, and the like to the external server. The external server may predict traffic information data in advance using AI technology or the like based on information collected from the vehicle or autonomous driving vehicles, and may provide the predicted traffic information data to the vehicle or autonomous driving vehicles.

The wireless communication technology implemented in the wireless devices 100 and 200 of the present disclosure may include Narrowband Internet of Things for low power communication as well as LTE, NR, and 6G. At this time, for example, NB-IoT technology may be an example of LPWAN (Low Power Wide Area Network) technology, and may be implemented in standards such as LTE Cat NB1 and / or LTE Cat Nb2, and is not limited the name. Additionally or alternatively, the wireless communication technology implemented in the wireless devices 100 and 200 of the present specification may perform communication based on LTE-M technology. At this time, as an example, LTE-M technology may be an example of LPWAN technology, and may be called various names such as eMTC (enhanced machine type communication). For example, the LTE-M technology may be implemented as at least any one of various standards such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the name. Additionally or alternatively, the wireless communication technology implemented in the wireless device (XXX, YYY) of the present disclosure may include at least one of ZigBee, Bluetooth, and Low Power Wide Area Network (LPWAN) considering low power communication, and is not limited to the name. As an example, ZigBee technology may generate personal area networks (PANs) related to small/low-power digital communication based on various standards such as IEEE 802.15.4, and may be called various names.

The embodiments described above are implemented by combinations of components and features of the present disclosure in predetermined forms. Each component or feature should be considered selectively unless specified separately. Each component or feature may be carried out without being combined with another component or feature. Moreover, some components and/or features are combined with each other and may implement embodiments of the present disclosure. The order of operations described in embodiments of the present disclosure may be changed. Some components or features of one embodiment may be included in another embodiment, or may be replaced by corresponding components or features of another embodiment. It is apparent to constitute an embodiment by combining claims that are not explicitly cited in the claims or to be included as a new claim by amendment after filing.

Embodiments of the present disclosure may be implemented by various means, for example, hardware, firmware, software, or combinations thereof. When embodiments are implemented by hardware, one embodiment of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the present disclosure may be implemented by modules, procedures, functions, etc. performing functions or operations described above. Software code may be stored in a memory and may be driven by a processor. The memory is provided inside or outside the processor and may exchange data with the processor by various well-known means.

It is apparent to those skilled in the art that the present disclosure may be embodied in other specific forms without departing from essential features of the present disclosure. Accordingly, the aforementioned detailed description should not be construed as limiting in all aspects and should be considered as illustrative. The scope of the present disclosure should be determined by rational construing of the appended claims, and all modifications within an equivalent scope of the present disclosure are included in the scope of the present disclosure.

[Industrial Applicability]

Although a scheme of transmitting and receiving power information in the wireless communication system of the present disclosure has been described with reference to an example applied to a 3GPP LTE/LTE-A system or a 5G system (New RAT system), the scheme may be applied to various wireless communication systems including Beyond 5G, 6G, Beyond 6G, etc., in addition to the 3GPP LTE/LTE-A system or 5G system.

**Claims**

1. A method for transmitting a sounding reference signal (SRS) in a wireless communication system, which is performed by a terminal, the method comprising:

   receiving, from a base station, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking;
   receiving, from the base station, the downlink signal based on the SRS-related configuration information;
   performing the frequency tracking based on the downlink signal; and
   transmitting, to the base station, an SRS corresponding to at least one SRS resource included in the SRS resource set, based on the frequency tracking.

2. The method of claim 1, wherein based on the SRS-related configuration information not including the information related to the downlink signal for the use, the frequency tracking is performed based on pathloss reference reference signal (RS).

3. The method of claim 1, wherein the SRS resource set includes one SRS resource.

4. The method of claim 3, wherein the one SRS resource includes multiple orthogonal frequency-division multiplexing (OFDM) symbols in one slot, and the multiple OFDM symbols include at least two non-contiguous OFDM symbols.

5. The method of claim 3, wherein the one SRS resource is configured in multiple slots, and the one SRS resource is configured based on a slot-wise reference signal pattern.

6. The method of claim 1, wherein the SRS resource set includes multiple SRS resources.

7. The method of claim 6, wherein the multiple SRS resources are configured to the same antenna port.

**8.** The method of claim 6, wherein the multiple SRS resources are configured in the same orthogonal frequency-division multiplexing (OFDM) symbol pattern.

**9.** The method of claim 6, wherein the multiple SRS resources are configured to the same transmissionComb value and the multiple SRS resources are configured to different combOffset values.

**10.** The method of claim 6, wherein the multiple SRS resources are set to the same spatial Relation Info value, and the frequency tracking is performed based on the spatial Relation Info value.

**11.** The method of claim 1, wherein the downlink signal is used as a quasi-co-location (QCL) reference reference signal (RS) for at least one SRS resource included in the SRS resource set.

**12.** The method of claim 1, wherein based on the at least one SRS resource included in the SRS resource set being overlapped with transmission of an SRS resource for another use and/or a physical uplink control channel (PUCCH), the at least one SRS resource or an overlapping interval of the at least one SRS resource is shifted in a time region.

**13.** A terminal configured to transmit a sounding reference signal (SRS) in a wireless communication system, the terminal comprising:

at least one transceiver;
at least one processor; and
at least one memory operatively connected to the at least one processor and storing instructions for performing operations based on being executed by the at least one processor,
wherein the operations include

receiving, from a base station, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking;
receiving, from the base station, the downlink signal based on the SRS-related configuration information;
performing the frequency tracking based on the downlink signal; and
transmitting, to the base station, an SRS corresponding to at least one SRS resource included in the SRS resource set, based on the frequency tracking.

**14.** The terminal of claim 13, wherein based on the SRS-related configuration information not including the information related to the downlink signal for the use, the frequency tracking is performed based on pathloss reference reference signal (RS).

**15.** The terminal of claim 13, wherein the downlink signal is used as a quasi-co-location (QCL) reference reference signal (RS) for at least one SRS resource included in the SRS resource set.

**16.** The terminal of claim 13, wherein based on the at least one SRS resource included in the SRS resource set being overlapped with transmission of an SRS resource for another use and/or a physical uplink control channel (PUCCH), the at least one SRS resource or an overlapping interval of the at least one SRS resource is shifted in a time region.

**17.** A method for receiving a sounding reference signal (SRS) in a wireless communication system, which is performed by a base station, the method comprising:

transmitting, to a terminal, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking;
transmitting, to the terminal, the downlink signal based on the SRS-related configuration information, wherein the frequency tracking is performed based on the downlink signal; and
receiving, from the terminal, an SRS corresponding to at least one SRS resource included in the SRS resource set, based on the frequency tracking.

**18.** A base station configured to receive a sounding reference signal (SRS) in a wireless communication system, the base station comprising:

at least one transceiver;
at least one processor; and
at least one memory operatively connected to the at least one processor and storing instructions for performing operations based on being executed by the at least one processor,
wherein the operations include

transmitting, to a terminal, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking;
transmitting, to the terminal, the downlink signal based on the SRS-related configuration information, wherein the frequency tracking is performed based on the downlink signal; and
receiving, from the terminal, an SRS corresponding to at least one SRS resource included in the SRS resource set, based on the frequency tracking.

19. A processing apparatus configured to control a terminal to transmit a sounding reference signal (SRS) in a wireless communication system, the processing apparatus comprising:

at least one processor; and
at least one memory operatively connected to the at least one processor and storing instructions for performing operations based on being executed by the at least one processor,
wherein the operations include:

receiving, from a base station, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking;
receiving, from the base station, the downlink signal based on the SRS-related configuration information;
performing the frequency tracking based on the downlink signal; and
transmitting, to the base station, an SRS corresponding to at least one SRS resource included in the SRS resource set, based on the frequency tracking.

20. A computer-readable storage medium storing at least one instruction which, when executed by at least one processor, causes the at least one processor to control operations,
wherein the operations include

receiving, from a base station, SRS-related configuration information, wherein the SRS-related configuration information includes at least one of information related to an SRS resource set, information related to a use of the SRS resource set, and/or information related to a downlink signal for the use, and the information related to the use for the SRS resource set indicates a use for frequency tracking;
receiving, from the base station, the downlink signal based on the SRS-related configuration information;
performing the frequency tracking based on the downlink signal; and
transmitting, to the base station, an SRS corresponding to at least one SRS resource included in the SRS resource set, based on the frequency tracking.

【FIG. 1】

【FIG. 2】

**[FIG. 3]**

Radio Frame 10ms

Fixed Size

Subframe 1ms

| 0 | 1 | 2 | 3 | 4 | 5 | 6 | 7 | 8 | 9 |

Subframe = {1, 2, 4} Slots

Slot

| 0 | 1 | 2 | 3 |

Slot = {7, 14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot = {2, 4, 7} Symbols - ffs

EP 4 203 370 A1

【FIG. 4】

One subframe

$14 \cdot 2^{\mu}$ OFDM symbols

$k = N_{RB}^{\mu} N_{SC}^{RB} - 1$

Resource block

Resource element
-In case of resource grid, $(k, \bar{l})$
-In case of resource block, $(k, l)$

$N_{RB}^{\mu} N_{SC}^{RB} - 1$ Subcarriers

$N_{SC}^{RB}$ Subcarriers

$k = 0$

$l = 0$

$l = 14 \cdot 2^{\mu} - 1$

【FIG. 5】

Resource grid

【FIG. 6】

Antenna port A
Antenna port B } Numerology X

Antenna port A
Antenna port B } Numerology Y

【FIG. 7】

【FIG. 8】

Base station receiving
beam sweeping

SRS#0 received
SRS#1 received
SRS#2 received
. . .

SRS
#0, 1, . . . N

Terminal transmitting beam
(fixed)

(a)

Base station receiving
beam fixed

SRS#0
SRS#1

Terminal transmitting beam
sweeping

(b)

【FIG. 9】

Terminal                                                    Base station

SRS Config. IE                                    S910
(usage=BM, SRS-SpatialRelation Info)

S920

Determine Tx beam
for SRS resource

S930
Transmit SRS through determine Tx beam

S940
feedback

【FIG. 10】

TRP 1

Layer group #1
for CW #1

TRP 2

Layer group #2
for CW #1

UE1

(a)

TRP 1

Layer group #1
for CW #1

TRP 2

Layer group #2
for CW #2

UE1

(b)

【FIG. 11】

$D_s$

11a

eNB

11b

eNB

$D_{min}$

$D_{min}$

Train

Travelling with speed v

Minimum Doppler shift

Maximum Doppler shift

【FIG. 12】

Cluster Slot Leaky cable

Intersection Field distribution

Received Power level

Position

Propagation delay

Position

【FIG. 13】

[FIG. 14]

EP 4 203 370 A1

TRP1

TRP2

TRS1
Doppler shift $= f_1$

TRS2
Doppler shift $= f_2$

TRS1 reception @UE: $f_c + f_1$
TRS2 reception @UE: $f_c + f_2$

Implicit indication

1) Implicit indication of per-TRP Doppler shift
Alt.1: Separated UL transmissions (e.g. by SRS/PUCCH/PUSCH)
 - UL carrier frequency for TRP1: $f_{UE,1} = f_c + f_1$
 - UL carrier frequency for TRP2: $f_{UE,2} = f_c + f_2$
Alt.2: Single UL transmissions with gNB/UE assumption
 - UL carrier frequency for TRP1 (SRS/PUCCH/PUSCH): $f_{UE,1} = f_c + f_1$
 - gNB/UE assumption: $f_2 = -f_1$

(Assumption: The local oscillator for uplink transmission tracks the phase-locked loop for the received downlink carrier.)

Pre-compensation @TRP1:
$\Delta f_{pre,1} = -f_1$

PDSCH1

PDSCH2

Pre-compensation @TRP2:
$\Delta f_{pre,2} = -f_2$

PDSCH from TRPs is transmitted in SFN manner
PDSCH1 reception @UE: $f_c + f_1 + \Delta f_{pre,1} = f_c$
PDSCH2 reception @UE: $f_c + f_2 + \Delta f_{pre,2} = f_c$

【FIG. 15】

(a)

(b)

(c)

(d)

【FIG. 16】

【FIG. 17】

:SRS transmission symbol

:PUCCH transmission symbol

| l=0 | 1 | 2 | 3 | 4 | 5 | 6 | 7 | 8 | 9 | 10 | 11 | 12 | 13 |

(a)

| l=0 | 1 | 2 | 3 | 4 | 5 | 6 | 7 | 8 | 9 | 10 | 11 | 12 | 13 |

(b)

【FIG. 18】

:SRS transmission symbol

:PUCCH transmission symbol

| l=0 | 1 | 2 | 3 | 4 | 5 | 6 | 7 | 8 | 9 | 10 | 11 | 12 | 13 |

(a)

| l=0 | 1 | 2 | 3 | 4 | 5 | 6 | 7 | 8 | 9 | 10 | 11 | 12 | 13 |

(b)

【FIG. 19】

```
                    ( Start )
                        |
                        v
+----------------------------------------------+
| Receive, from base station, SRS-related      |----S1901
| configuration information                    |
+----------------------------------------------+
                        |
                        v
+----------------------------------------------+
| Receive, from base station, downlink signal, |----S1902
| based on SRS-related configuration information|
+----------------------------------------------+
                        |
                        v
+----------------------------------------------+
| Perform frequency tracking based on downlink  |----S1903
| signal                                        |
+----------------------------------------------+
                        |
                        v
+----------------------------------------------+
| Transmit, to base station, SRS corresponding  |----S1904
| to at least one SRS resource included in SRS  |
| resource set based on frequency tracking End  |
+----------------------------------------------+
                        |
                        v
                    ( End )
```

【FIG. 20】

```
                    ( Start )
                        |
                        v
+----------------------------------------------+
| Transmit, to terminal, SRS-related configuration|--S2001
| information                                   |
+----------------------------------------------+
                        |
                        v
+----------------------------------------------+
| Transmit, to terminal, downlink signal, based |--S2002
| on SRS-related configuration information      |
+----------------------------------------------+
                        |
                        v
+----------------------------------------------+
| Receive, from terminal, SRS corresponding to  |--S2003
| at least one SRS resource included in SRS     |
| resource set based on frequency tracking      |
+----------------------------------------------+
                        |
                        v
                    ( End )
```

【FIG. 21】

100e

1

100f

Home
Appliance

IoT device

150a

150a

120

300

120

AI Server
/device

Hand-held
device

400

150a

100d

150a

120

Network
(5G)

XR device

150a

150a

150a

120a

Robot

100c

120

120

150a

100a

Vehicle

Vehicle

150b

100b-1

100b-2

【FIG. 22】

108

208

102

100

106

First Device

206

200

202

Second Device

Processor(s)

Transceiver(s)

Transceiver(s)

Processor(s)

Memory(s)

Memory(s)

104

204

【FIG. 23】

Device(100,200)

Communication unit(110)
(e.g., 5G communication unit)

Communication circuit(112)
(e.g., processor(s),memory(s))

Transceiver(s)(114)
(e.g., RF unit(s),antenna(s))

Control unit(120)
(e.g., processor(s))

Memory unit(130)
(e.g., RAM, storage)

Additional components(140)
(e.g., power unit/battery,
I/O unit,driving unit,
computing unit)

【FIG. 24】

140a

100

Power supply
unit

108

110

120

130

Communication
unit

Control
unit

Memory
unit

140c

140b

I/O unit

Display

Interface
unit

140d

【FIG. 25】

## EP 4 203 370 A1

<table>
<tr><td colspan="2"><strong>INTERNATIONAL SEARCH REPORT</strong></td><td>International application No.<br><br><strong>PCT/KR2021/013217</strong></td></tr>
</table>

| A. | CLASSIFICATION OF SUBJECT MATTER |
|---|---|
| | **H04L 5/00**(2006.01)i; **H04W 72/04**(2009.01)i; **H04B 7/06**(2006.01)i |

According to International Patent Classification (IPC) or to both national classification and IPC

| B. | FIELDS SEARCHED |
|---|---|

Minimum documentation searched (classification system followed by classification symbols)

H04L 5/00(2006.01); H04B 7/0404(2017.01); H04B 7/0456(2017.01); H04W 52/36(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사운딩 참조 신호(sounding reference signal, SRS), 설정 정보(configuration information), 자원 집합(resource set), 용도(usage), 주파수 추적(frequency tracking)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2018-203653 A1 (LG ELECTRONICS INC.) 08 November 2018 (2018-11-08)<br>See page 2, line 10 - page 28, line 16; page 89, line 2 - page 106, line 22; and claims 1-3. | 1,3,4,6-8,11-13,15-20 |
| A | | 2,5,9,10,14 |
| Y | HUAWEI et al. Discussion on positioning SRS transmission during DRX inactive time. R4-2011167, 3 GPP TSG-RAN WG4 Meeting #96-e. 07 August 2020.<br>See page 1. | 1,3,4,6-8,11-13,15-20 |
| Y | US 2020-0112926 A1 (QUALCOMM INC.) 09 April 2020 (2020-04-09)<br>See paragraphs [0134]-[0161]; and figures 8-9. | 7 |
| Y | ERICSSON. Outcome of email thread [100e-NR-Pos-ULRS-02]. R1-2001287, 3GPP TSG-RAN WG1 Meeting #100-e. 29 February 2020.<br>See page 1. | 12,16 |
| A | KR 10-2020-0066682 A (HUAWEI TECHNOLOGIES CO., LTD.) 10 June 2020 (2020-06-10)<br>See paragraphs [0063]-[0074]; and figure 6. | 1-20 |

| ☐ Further documents are listed in the continuation of Box C. | ☑ See patent family annex. |
|---|---|

| | Special categories of cited documents: | |
|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" | document member of the same patent family |

| Date of the actual completion of the international search | Date of mailing of the international search report |
|---|---|
| **18 January 2022** | **18 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

78

| INTERNATIONAL SEARCH REPORT<br>Information on patent family members | | | | International application No.<br>**PCT/KR2021/013217** | |
|---|---|---|---|---|---|
| Patent document<br>cited in search report | | Publication date<br>(day/month/year) | Patent family member(s) | | Publication date<br>(day/month/year) |
| WO 2018-203653 A1 | | 08 November 2018 | CN 109923828 A | | 21 June 2019 |
| | | | EP 3471327 A1 | | 17 April 2019 |
| | | | EP 3471327 B1 | | 11 August 2021 |
| | | | EP 3910865 A1 | | 17 November 2021 |
| | | | JP 2020-502932 A | | 23 January 2020 |
| | | | JP 6810269 B2 | | 06 January 2021 |
| | | | KR 10-2019-0039070 A | | 10 April 2019 |
| | | | KR 10-2020-0032275 A | | 25 March 2020 |
| | | | KR 10-2257816 B1 | | 28 May 2021 |
| | | | KR 10-2270085 B1 | | 28 June 2021 |
| | | | US 10841059 B2 | | 17 November 2020 |
| | | | US 10979186 B2 | | 13 April 2021 |
| | | | US 2019-0190669 A1 | | 20 June 2019 |
| | | | US 2019-0199497 A1 | | 27 June 2019 |
| | | | US 2021-0211254 A1 | | 08 July 2021 |
| US 2020-0112926 A1 | | 09 April 2020 | CN 112789905 A | | 11 May 2021 |
| | | | EP 3864906 A1 | | 18 August 2021 |
| | | | US 11184863 B2 | | 23 November 2021 |
| | | | WO 2020-076841 A1 | | 16 April 2020 |
| KR 10-2020-0066682 A | | 10 June 2020 | CA 3078839 A1 | | 18 April 2019 |
| | | | CN 111201733 A | | 26 May 2020 |
| | | | EP 3692665 A1 | | 12 August 2020 |
| | | | JP 2020-537426 A | | 17 December 2020 |
| | | | US 11025388 B2 | | 01 June 2021 |
| | | | US 2019-0109679 A1 | | 11 April 2019 |
| | | | US 2021-0288767 A1 | | 16 September 2021 |
| | | | WO 2019-072138 A1 | | 18 April 2019 |

Form PCT/ISA/210 (patent family annex) (July 2019)